# EUROPEAN PATENT APPLICATION

(11) **EP 4 708 891 A1**
(43) Date of publication of application: **11.03.2026**
(21) Application number: 24844768.2
(22) Date of filing: 22.07.2024
(51) Int. Cl.: H04N 23/55

(54) **IMAGE ACQUISITION DEVICE AND WATER PURIFICATION APPARATUS**

(30) Priority: 21.07.2023 CN 202321959810 U; 21.07.2023 CN 202321959745 U
(71) Applicant: Wuhu Midea Smart Kitchen Appliance Manufacturing Co., Ltd., Wuhu, Anhui 241000 (CN)
(72) Inventor: LIU, Linfeng, Wuhu, Anhui 241000 (CN); WU, Qijun, Wuhu, Anhui 241000 (CN); LI, Biao, Wuhu, Anhui 241000 (CN); WEI, Zhongke, Wuhu, Anhui 241000 (CN)
(74) Representative: RGTH
(86) International application number: PCT/CN2024/106851
(87) International publication number: WO 2025/021077

(57) **Abstract**

An image acquisition device and a water purification apparatus, which belong to the technical field of water purification apparatuses. The image acquisition device comprises: a lens and a light adding device; and a light guide assembly comprising a first light surface and a second light surface, wherein the first light surface and the second light surface do not directly face each other so that a light path of the light guide assembly is a curved light path; the lens and the light adding device face the first light surface; the second light surface is configured to face an anti-counterfeiting label area of a filter cartridge; the light guide assembly is configured to guide a light ray to be transmitted between the first light surface and the second light surface; and the lens is configured to acquire an image of the anti-counterfeiting label area by means of the light guide assembly.

## Description

### CROSS-REFERENCE TO RELATED APPLICATIONS

This application is based on and claims priorities to Chinese patent applications No. 202321959810.0 and No. 202321959745.1, both filed on July 21, 2023, the entire contents of which are incorporated herein by reference.

### FIELD

The present disclosure relates to the field of water purification apparatus technologies, and more particularly, to an image acquisition device and a water purification apparatus.

### BACKGROUND

A filter cartridge is a key consumable for a water purification apparatus and requires regular replacement. Counterfeit and substandard filter cartridges are common on the market. These counterfeit filter cartridges not only infringe on profits of manufacturers, but also pose a risk to the quality of the filter cartridges, affecting an operation of the water purification apparatus and health of a user. Therefore, anti-counterfeiting identification of the filter cartridge in the water purification apparatus is crucial.

Currently, some water purifiers affix anti-counterfeiting QR codes to the filter cartridges, allowing for the anti-counterfeiting identification using a code scanning device. However, a scanning lens of such device requires a long shooting distance, and a space inside the water purifier is limited, making the code scanning device difficult to be mounted. In addition, the water purifier is a closed space with insufficient light, resulting in poor imaging quality of the code scanning device.

### SUMMARY

The present disclosure aims to solve at least one of the technical problems in the related art. To this end, the present disclosure provides an image acquisition device and a water purification apparatus. The image acquisition device may be mounted inside the water purification apparatus and provides sufficient light for anti-counterfeiting identification, which helps to reduce a dimension of the water purification apparatus and improve a space utilization rate inside the water purification apparatus.

In a first aspect, the present disclosure provides an image acquisition device used for anti-counterfeiting identification of a filter cartridge of a water purification apparatus. The image acquisition device comprises: a lens and a light supplement element; and a light guide assembly having a first optical surface and a second optical surface that are arranged to not directly face each other to cause a curved optical path of the light guide assembly, the lens and the light supplement element facing towards the first optical surface, the second optical surface facing towards an anti-counterfeiting mark area of the filter cartridge. The light guide assembly is configured to guide a light ray to be transmitted between the first optical surface and the second optical surface. The lens is configured to acquire an image of the anti-counterfeiting mark area through the light guide assembly.

According to the image acquisition device of the present disclosure, transmission of the light ray between the filter cartridge and the lens is guided by the light guide assembly having two optical surfaces that are arranged to not directly face each other. The light supplement element is disposed adjacent to the lens to provide sufficient light for the anti-counterfeiting identification. In this way, a problem of mounting the image acquisition device in a narrow space inside the water purification apparatus is solved, the space utilization rate inside the water purification apparatus is improved, and the dimension of the water purification apparatus is facilitated to be reduced.

According to an embodiment of the present disclosure, the light guide assembly has a prism structure.

According to an embodiment of the present disclosure, the prism structure comprises a first prism column and a second prism column. The first optical surface is located at an end of the first prism column. The other end of the first prism column is connected to an end of the second prism column. The second optical surface is located at the other end of the second prism column.

According to an embodiment of the present disclosure, the first prism column has a first reflection surface. The second prism column has a second reflection surface. The first reflection surface is configured to reflect a light ray from the first optical surface to the second reflection surface. The second reflection surface is configured to reflect a light ray from the second optical surface to the first reflection surface.

According to an embodiment of the present disclosure, a connection where the first prism column and the second prism column meet has a third reflection surface. The third reflection surface is configured to reflect a light ray from the first reflection surface to the second reflection surface.

According to an embodiment of the present disclosure, an angle between the first reflection surface and the first optical surface is 45°.

According to an embodiment of the present disclosure, an angle between the second reflection surface and the second optical surface is 45°.

According to an embodiment of the present disclosure, an angle between the third reflection surface and the first reflection surface and an angle between the third reflection surface and the second reflection surface are both 90°.

According to an embodiment of the present disclosure, the prism structure is made of plastic or glass.

According to an embodiment of the present disclosure, the light guide assembly defines a light guide channel. An end of the light guide channel is the first optical surface. The other end of the light guide channel is the second optical surface. The light guide channel is provided therein with at least one mirror.

According to an embodiment of the present disclosure, the light supplement element comprises one or more supplement lights.

In a second aspect, the present disclosure provides a water purification apparatus. The water purification apparatus comprises: a housing defining an accommodation space; at least one filter cartridge located in the accommodation space; and at least one image acquisition device according to the first aspect. The image acquisition device is located in the accommodation space. The image acquisition device is in one-to-one correspondence with the filter cartridge. The image acquisition device faces towards the anti-counterfeiting mark area of the filter cartridge.

According to the water purification apparatus of the present disclosure, the transmission of the light ray between the filter cartridge and the lens is guided by the light guide assembly having the two optical surfaces that are arranged to not directly face each other. The light supplement element is disposed adjacent to the lens to provide sufficient light for the anti-counterfeiting identification. In this way, the problem of mounting the image acquisition device in the narrow space inside the water purification apparatus is solved, the space utilization rate inside the water purification apparatus is improved, and the dimension of the water purification apparatus is facilitated to be reduced.

According to an embodiment of the present disclosure, the water purification apparatus further comprises: a reset button disposed at the housing and configured to output, based on a received input, a reset button signal; and a control board electrically connected to the reset button and the image acquisition device. The control board is located in the accommodation space and configured to control, based on the reset button signal, the image acquisition device to acquire the image of the anti-counterfeiting mark area.

According to the water purification apparatus of the present disclosure, the image acquisition device cooperates with the reset button at the housing, and the image of the anti-counterfeiting mark area of the filter cartridge is acquired, in such a manner that anti-counterfeiting identification and reset operations are performed. In this way, a cost of the anti-counterfeiting identification of the filter cartridge can be reduced, and a replacement operation of the filter cartridge can be simplified.

According to an embodiment of the present disclosure, the water purification apparatus further comprises an anti-counterfeiting information output device. The anti-counterfeiting information output device is disposed at the housing and electrically connected to the control board. The anti-counterfeiting information output device is configured to output product authenticity information of the filter cartridge.

According to an embodiment of the present disclosure, the anti-counterfeiting information output device comprises an anti-counterfeiting indicator light configured to light up in response to the filter cartridge being identified as counterfeit.

According to an embodiment of the present disclosure, the image acquisition device comprises an image acquisition component and a light supplement component.

According to an embodiment of the present disclosure, the water purification apparatus further comprises a communication module electrically connected to the control board. The control board is configured to communicate with a server through the communication module.

According to an embodiment of the present disclosure, the control board is configured to receive a heartbeat signal transmitted by the image acquisition device at a target time interval, and transmit a feedback signal corresponding to the heartbeat signal to the image acquisition device.

According to an embodiment of the present disclosure, the water purification apparatus further comprises a fault information output device. The fault information output device is electrically connected to the control board and disposed at the housing. The fault information output device is configured to output fault information of the water purification apparatus.

According to an embodiment of the present disclosure, the fault information output device comprises at least one fault indicator light configured to light up in response to a fault occurring in the water purification apparatus.

According to an embodiment of the present disclosure, the image acquisition device further comprises a plurality of image acquisition units. The plurality of image acquisition units are arranged in one-to-one correspondence with a plurality of filter cartridges of the water purification apparatus.

According to an embodiment of the present disclosure, the reset button is a light-sensitive button.

In a third aspect, the present disclosure provides a water purification apparatus. The water purification apparatus comprises: a housing and a filter cartridge, the housing defining an accommodation space, and the filter cartridge being located in the accommodation space; an image acquisition device located in the accommodation space and facing towards an anti-counterfeiting mark area of the filter cartridge; a reset button disposed at the housing and configured to output, based on a received input, a reset button signal; and a control board electrically connected to the reset button and the image acquisition device. The control board is located in the accommodation space and configured to control, based on the reset button signal, the image acquisition device to acquire an image of the anti-counterfeiting mark area.

According to the water purification apparatus of the present disclosure, the image acquisition device cooperates with the reset button at the housing, and the image of the anti-counterfeiting mark area of the filter cartridge is acquired, in such a manner that the anti-counterfeiting identification and reset operations are performed. In this way, the cost of the anti-counterfeiting identification of the filter cartridge can be reduced, and the replacement operation of the filter cartridge can be simplified.

According to an embodiment of the present disclosure, the water purification apparatus further comprises an anti-counterfeiting information output device. The anti-counterfeiting information output device is disposed at the housing and electrically connected to the control board. The anti-counterfeiting information output device is configured to output product authenticity information of the filter cartridge.

According to an embodiment of the present disclosure, the anti-counterfeiting information output device comprises an anti-counterfeiting indicator light configured to light up in response to the filter cartridge being identified as counterfeit.

According to an embodiment of the present disclosure, the image acquisition device comprises an image acquisition component and a light supplement component.

According to an embodiment of the present disclosure, the water purification apparatus further comprises a communication module electrically connected to the control board. The control board is configured to communicate with a server through the communication module.

According to an embodiment of the present disclosure, the control board is configured to receive a heartbeat signal transmitted by the image acquisition device at a target time interval, and transmit a feedback signal corresponding to the heartbeat signal to the image acquisition device.

According to an embodiment of the present disclosure, the water purification apparatus further comprises a fault information output device. The fault information output device is electrically connected to the control board and disposed at the housing. The fault information output device is configured to output fault information of the water purification apparatus.

According to an embodiment of the present disclosure, the fault information output device comprises at least one fault indicator light configured to light up in response to a fault occurring in the water purification apparatus.

According to an embodiment of the present disclosure, the image acquisition device comprises a plurality of image acquisition units. The plurality of image acquisition units are arranged in one-to-one correspondence with a plurality of filter cartridges of the water purification apparatus.

According to an embodiment of the present disclosure, the reset button is a light-sensitive button.

Additional aspects and advantages of the present disclosure will be provided in part in the following description, or will in part become apparent from the following description or be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a first schematic flowchart of an anti-counterfeiting identification method of a filter cartridge according to an embodiment of the present disclosure.
FIG. 2 is a schematic diagram of a first mark image according to an embodiment of the present disclosure.
FIG. 3 is a schematic diagram of a first mark sub-image according to an embodiment of the present disclosure.
FIG. 4 is a second schematic flowchart of an anti-counterfeiting identification method of a filter cartridge according to an embodiment of the present disclosure.
FIG. 5 is a first schematic structural diagram of an anti-counterfeiting identification device of a filter cartridge according to an embodiment of the present disclosure.
FIG. 6 is a third schematic flowchart of an anti-counterfeiting identification method of a filter cartridge according to an embodiment of the present disclosure.
FIG. 7 is a first schematic diagram of an anti-counterfeiting mark image according to an embodiment of the present disclosure.
FIG. 8 is a second schematic diagram of an anti-counterfeiting mark image according to an embodiment of the present disclosure.
FIG. 9 is a third schematic diagram of an anti-counterfeiting mark image according to an embodiment of the present disclosure.
FIG. 10 is a fourth schematic flowchart of an anti-counterfeiting identification method of a filter cartridge according to an embodiment of the present disclosure.
FIG. 11 is a second schematic structural diagram of an anti-counterfeiting identification device of a filter cartridge according to an embodiment of the present disclosure.
FIG. 12 is a fourth schematic flowchart of an anti-counterfeiting identification method of a filter cartridge according to an embodiment of the present disclosure.
FIG. 13 is a first schematic diagram of a to-be-processed image according to an embodiment of the present disclosure.
FIG. 14 is a second schematic diagram of a to-be-processed image according to an embodiment of the present disclosure.
FIG. 15 is a third schematic diagram of a to-be-processed image according to an embodiment of the present disclosure.
FIG. 16 is a schematic diagram of a target binary image being filled with solid color pixels according to an embodiment of the present disclosure.
FIG. 17 is a schematic diagram of a first target image according to an embodiment of the present disclosure.
FIG. 18 is a schematic diagram of target pixel counting for a first target image according to an embodiment of the present disclosure.
FIG. 19 is a schematic diagram of a position of a target area according to an embodiment of the present disclosure.
FIG. 20 is a fifth schematic flowchart of an anti-counterfeiting identification method of a filter cartridge according to an embodiment of the present disclosure.
FIG. 21 is a third schematic structural diagram of an anti-counterfeiting identification device of a filter cartridge according to an embodiment of the present disclosure.
FIG. 22 is a schematic structural diagram of an electronic apparatus according to an embodiment of the present disclosure.
FIG. 23 is a first schematic structural diagram of a water purification apparatus according to an embodiment of the present disclosure.
FIG. 24 is a schematic flowchart of resetting a filter cartridge of a water purification apparatus according to an embodiment of the present disclosure.
FIG. 25 is a first schematic structural diagram of a light guide assembly of an image acquisition device according to an embodiment of the present disclosure.
FIG. 26 is a second schematic structural diagram of a light guide assembly of an image acquisition device according to an embodiment of the present disclosure.
FIG. 27 is a second schematic structural diagram of a water purification apparatus according to an embodiment of the present disclosure.

Reference numerals of the accompanying drawings:
housing 200, filter cartridge 300, image acquisition device 400, light guide assembly 410, first optical surface 411, second optical surface 412, first prism column 413, second prism column 414, first reflection surface 415, second reflection surface 416, third reflection surface 417, mirror 418.

### DETAILED DESCRIPTION OF THE EMBODIMENTS

Technical solutions according to embodiments of the present disclosure will be described clearly below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art shall fall within the protection scope of the present disclosure.

It should be noted that terms "first" and "second" in the specification and claims of the present disclosure are used to distinguish similar objects, rather than to describe a specific sequence or order. It should be understood that data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of the objects is not limited. For example, one or a plurality of first objects may be provided. In addition, "and/or" throughout the specification and appended claims indicates at least one of the objects associated with "and/or". The character "/" generally indicates that the associated objects before and after the character are in an "or" relationship.

An anti-counterfeiting identification method of a filter cartridge, an anti-counterfeiting identification device of the filter cartridge, an electronic apparatus, a readable storage medium, a water purification apparatus, and an image acquisition device provided in the embodiments of the present disclosure will be described in detail below through embodiments and their application scenarios in combination with the accompanying drawings.

The anti-counterfeiting identification method of the filter cartridge may be applied to a terminal, and may be specifically executed by hardware or software in the terminal.

According to the anti-counterfeiting identification method of the filter cartridge provided in the embodiments of the present disclosure, an executor of the anti-counterfeiting identification method of the filter cartridge may be an electronic apparatus or a functional module or a functional entity in the electronic apparatus that can implement the anti-counterfeiting identification method of the filter cartridge. The electronic apparatus mentioned in the embodiments of the present disclosure comprises but is not limited to a mobile phone, a tablet computer, a computer, a camera, a wearable apparatus, etc. The anti-counterfeiting identification method of the filter cartridge provided in the embodiments of the present disclosure is described below by taking the electronic apparatus as an example of the executor.

It should be noted that a surface of the filter cartridge in the embodiments of the present disclosure is provided with an anti-counterfeiting mark, which may be an icon, a QR code or other identification pattern used for anti-counterfeiting identification. The anti-counterfeiting mark may be disposed at the surface of the filter cartridge by printing or other means.

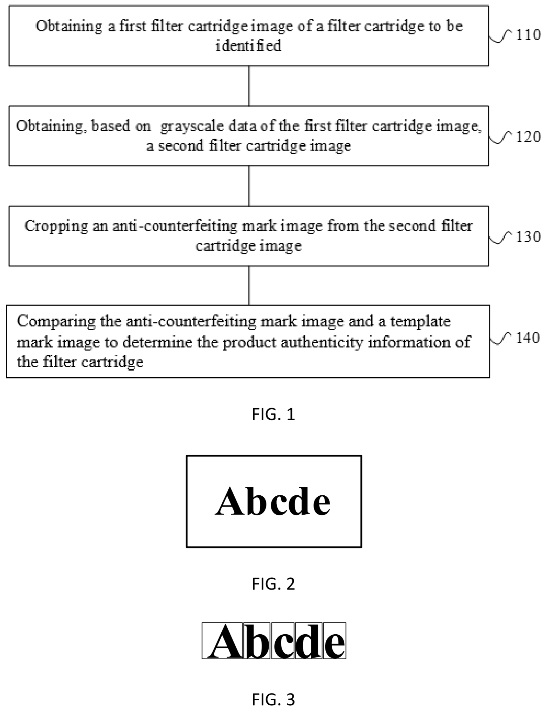

As illustrated in FIG. 1, the anti-counterfeiting identification method of the filter cartridge provided in the embodiments of the present disclosure comprises block 110 to block 140.

At block 110, a first filter cartridge image of a filter cartridge 300 to be identified is obtained.

The first filter cartridge image is a YUV image, and the first filter cartridge image comprises an anti-counterfeiting mark of the filter cartridge 300.

The first filter cartridge image is an image that uses YUV three components to store data, where Y represents luminance, i.e., grayscale value, and U and V both represent chrominance for describing color and color saturation.

At this block, the first filter cartridge image in YUV format is directly acquired, which does not place high requirements on imaging performance of an image acquisition device 400 and helps reduce a cost of the anti-counterfeiting identification. In addition, the first filter cartridge image has a small data volume relative to an image in RGB format, which facilitates storage and processing in a microcontroller unit (MCU) with a low cost and a small random access memory (RAM).

At block 120, based on grayscale data of the first filter cartridge image, a second filter cartridge image is obtained.

In this embodiment, the grayscale data of the first filter cartridge image is extracted to obtain the second filter cartridge image, completing acquisition and storage of image data of the filter cartridge 300.

In actual implementation, the second filter cartridge image may be stored to an on-chip flash memory of the microcontroller unit for further processing.

At block 130, an anti-counterfeiting mark image is cropped from the second filter cartridge image.

At this block, the second filter cartridge image is cropped, and images of other areas except the anti-counterfeiting mark in the second filter cartridge image are cropped to obtain the anti-counterfeiting mark image, and a data volume of the anti-counterfeiting mark image is smaller.

At block 140, the anti-counterfeiting mark image and a template mark image are compared to determine authenticity information of the filter cartridge 300.

When the anti-counterfeiting mark image is obtained by cropping, the anti-counterfeiting mark image is compared with the template mark image, and authenticity of the filter cartridge 300 is determined based on a difference degree between a currently acquired anti-counterfeiting mark image and the template mark image.

When the difference degree between the anti-counterfeiting mark image and the template mark image is large, it is indicated that the filter cartridge 300 is counterfeit. When the difference degree between the anti-counterfeiting mark image and the template mark image is small, it is indicated that the filter cartridge 300 is genuine.

It should be noted that, by comparing with the template mark image, there is no need to run complex image processing algorithms in a processor such as a microcontroller unit, reducing requirements for the processor of the anti-counterfeiting identification of the filter cartridge.

In this embodiment, the anti-counterfeiting identification of the filter cartridge 300 is divided into two independent stages: image acquisition and storage, which involves obtaining the first filter cartridge image in the YUV format and saving the grayscale data of the first filter cartridge image; and image processing and matching, which involves extracting the second filter cartridge image, obtaining the anti-counterfeiting mark image, comparing the anti-counterfeiting mark image with the template mark image, and determining authenticity of a product.

In actual implementation, the microcontroller unit with the low cost and the small random access memory may be used to execute the above-described processes of the image acquisition and storage and the image processing and matching, in such a manner that low-cost anti-counterfeiting identification of the filter cartridge is realized.

It should be understood that, timeliness requirements for an anti-counterfeiting identification scenario of the filter cartridge are not high. By performing the anti-counterfeiting identification through the two independent stages-the image acquisition and storage and the image processing and matching, requirements for the anti-counterfeiting identification of the filter cartridge in a water purification apparatus can be met.

According to the anti-counterfeiting identification method of the filter cartridge of the present disclosure, by acquiring the first filter cartridge image, obtaining the second filter cartridge image by extracting the grayscale data, cropping the second filter cartridge image, obtaining the anti-counterfeiting mark image, and comparing the anti-counterfeiting mark image with the template mark image, the authenticity of the filter cartridge is determined. Requirements for an image processor are relatively low, and the anti-counterfeiting identification of the filter cartridge can be realized by using the microcontroller unit with the small random access memory and the low cost, effectively reducing a cost of the anti-counterfeiting identification of the filter cartridge.

In some embodiments, block 140 of comparing the anti-counterfeiting mark image with the template mark image to determine the authenticity information of the filter cartridge 300 may comprise: performing image segmentation processing on the anti-counterfeiting mark image based on grayscale information, to obtain a first mark image; performing binarization processing and rotation processing on the first mark image, to obtain a binary image; performing, based on a mark dimension, image segmentation processing on the binary image, to obtain a plurality of first mark sub-images; performing translation processing on the plurality of first mark sub-images, to obtain a plurality of second mark sub-images corresponding to a second mark image; comparing the second mark image with the template mark image, to determine the product authenticity information.

Image segmentation refers to dividing an image into several non-overlapping regions based on features such as grayscale, color, spatial texture, and geometric shape, in such a manner that these features exhibit consistency or similarity in a same region, but exhibit obvious differences among different regions.

In this embodiment, based on grayscale information of the anti-counterfeiting mark image, the first mark image is obtained through the image segmentation, in such a manner that an influence of other factors other than the anti-counterfeiting mark in the anti-counterfeiting mark image on the anti-counterfeiting identification of the filter cartridge is reduced.

When the binarization processing and the rotation processing are performed on the first mark image, second image segmentation is performed based on the mark dimension of the anti-counterfeiting mark to obtain the plurality of first mark sub-images. Each first mark sub-image corresponds to a different region of the anti-counterfeiting mark.

For example, as illustrated in FIG. 2, the first mark image comprises an anti-counterfeiting mark Abcde. Based on the mark dimension of each letter of Abcde, the image segmentation is performed on the binary image of the first mark image.

As illustrated in FIG. 3, the anti-counterfeiting mark Abcde is divided into the first mark sub-images corresponding to the five letters A, b, c, d, and e.

In this embodiment, subsequent to segmenting and obtaining the first mark sub-image, the plurality of first mark sub-images are translated to obtain the corresponding plurality of second mark sub-images. The plurality of second mark sub-images form the second mark image. The second mark image is compared with the template mark image to determine the authenticity of the filter cartridge.

In some embodiments, the performing the binarization processing and the rotation processing on the first mark image may comprise: performing, based on the first mark image, the binarization processing by iterating over binary thresholds within a binary threshold range, and perform the rotation processing by iterating over rotation angles within a rotation angle range.

In this embodiment, repeated binarization processing and rotation processing are performed on the first mark image until all the binary thresholds within the binary threshold range and the rotation angles within the rotation angle range are iterated over, to obtain a plurality of binary images. Subsequently, the image segmentation and translation processing based on the mark dimension are performed on each of plurality of binary images to obtain a plurality of second mark images. The plurality of second mark images are compared with the template mark image to determine the authenticity of the filter cartridge.

For example, the binary threshold range comprises a binary threshold 1, a binary threshold 2, and a binary threshold 3. The rotation angle range comprises a rotation angle 1 and a rotation angle 2.

The binarization processing and the rotation processing are performed on the first mark image. The binarization processing is performed respectively in accordance with the binary threshold 1, the binary threshold 2, and the binary threshold 3, in such a manner that three binary images are obtained. The rotation processing is performed respectively at the rotation angle 1 and the rotation angle 2 on the three binary images, in such a manner that six rotated binary images are obtained.

In some embodiments, the performing the translation processing on the plurality of first mark sub-images may comprise: performing, based on the first mark sub-image, the translation processing by iterating over translation actions within a set of translation actions.

In this embodiment, the translation processing is performed on the first mark sub-image by iterating over the translation actions within the set of translation actions. One first mark sub-image may be processed to obtain the plurality of second mark sub-images corresponding to different translation actions.

For example, the set of translation actions comprises translating upward, translating downward, and translating leftward. Performing the translation processing on one first mark sub-image can obtain three second mark sub-images.

In some embodiments, the comparing the second mark image with the template mark image to determine the authenticity information of the product comprises: comparing the plurality of second mark sub-images of the second mark image with a plurality of template mark sub-images of the template mark image one by one, to obtain an image difference between the second mark image and the template mark image; and determining, based on the image difference corresponding to the second mark image, the authenticity information of the product.

The second mark image comprises the plurality of second mark sub-images, each of which represents a region of the anti-counterfeiting mark. The plurality of second mark sub-images are compared with the plurality of template mark sub-images of the template mark image one by one, to obtain a difference degree of different regions of the anti-counterfeiting mark of the filter cartridge 300. The authenticity of the filter cartridge is determined based on the image difference between the second mark image and the template mark image.

For example, the second mark image comprises the second mark sub-images corresponding to the five letters A, b, c, d, and e. The five second mark sub-images are compared with the corresponding template mark sub-images of the template mark image, to obtain an image difference between each second mark sub-image and its corresponding template mark sub-image.

In actual implementation, the image difference may be a pixel difference between each pixel point in two images.

In some embodiments, the determining, based on the image difference corresponding to the second mark image, the authenticity information of the product may comprise: obtaining the plurality of second mark images; and determining, based on a minimum image difference among the image differences of the plurality of second mark images, the authenticity information of the product.

It should be understood that, an image acquired by the image acquisition device 400 is different from a pre-stored template mark image in terms of acquisition angle, light, etc.

In this embodiment, the plurality of second mark images can be obtained through binarization, rotation, and translation, achieving expansion of an amount of image data. Under the premise of not changing features of the anti-counterfeiting mark of the current filter cartridge 300, sufficient comparison with the template mark image can reduce an impact of image acquisition angle, light, and other conditions on the comparison, ensuring accuracy of the anti-counterfeiting identification of the filter cartridge.

In some embodiments, the cropping the anti-counterfeiting mark image from the second filter cartridge image comprises: determining, based on a target grayscale threshold, an anti-counterfeiting mark boundary in the second filter cartridge image; and cropping, based on the anti-counterfeiting mark boundary and dimension information of the anti-counterfeiting mark, the second filter cartridge image to obtain the anti-counterfeiting mark image.

In this embodiment, based on a predetermined target grayscale threshold, the anti-counterfeiting mark boundary in the second filter cartridge image is searched. Based on the anti-counterfeiting mark boundary and the dimension information of the anti-counterfeiting mark, the second filter cartridge image is cropped.

It should be understood that, when cropping, based on the dimension information of the anti-counterfeiting mark, the second filter cartridge image, it is first determined whether a dimension of the second filter cartridge image is consistent with dimension information of a pre-stored anti-counterfeiting mark. When in a negative determination, the second filter cartridge image is scaled in an appropriate ratio.

An embodiment is introduced below.

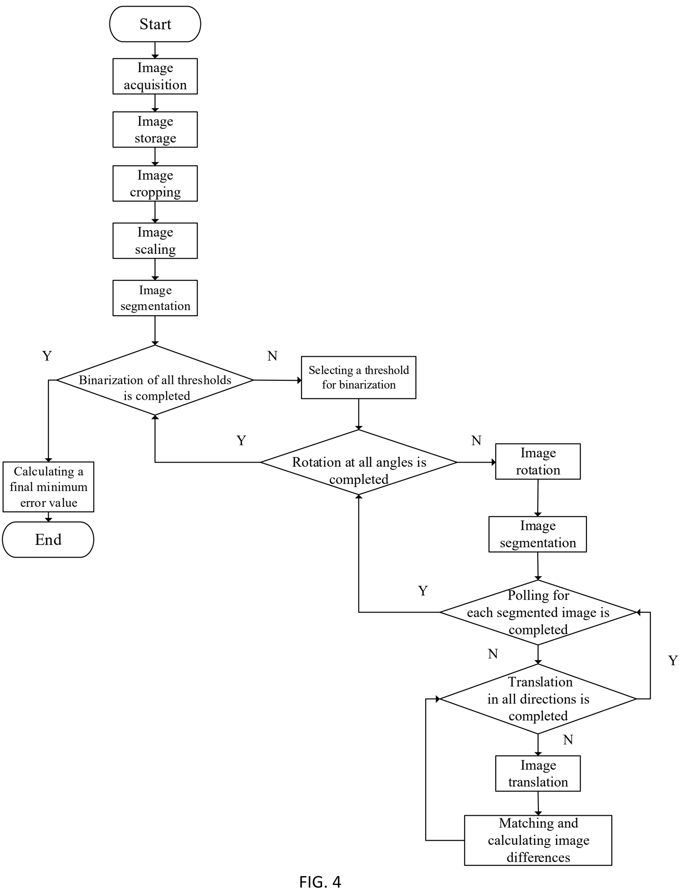

As illustrated in FIG. 4, the image acquisition device 400 directly acquires an image of the filter cartridge 300. The MCU extracts grayscale data from a complete first filter cartridge image transmitted from the image acquisition device 400, to obtain the second filter cartridge image. The data is stored into an on-chip flash of the MCU for further processing.

The MCU reads the second filter cartridge image stored in the flash, searches for a complete anti-counterfeiting mark boundary through the predetermined target grayscale threshold, and crops the second filter cartridge image in combination with the dimension information of the anti-counterfeiting mark, to obtain the anti-counterfeiting mark image.

An image matching operation is performed on the anti-counterfeiting mark image and the template mark image. In order to improve a matching degree, a first mark image obtained by a first segmentation is subjected to superimposed processing in three dimensions: image binarization, image rotation, and image translation, and then compared with an original template mark image to determine the authenticity of the product.

In this embodiment, the first mark image is binarized by selecting a predetermined binary threshold, and the image is rotated at 1-degree intervals in a predetermined rotation range. A rotated logo image is segmented based on a predetermined mark dimension to obtain the plurality of first mark sub-images. The first mark sub-image is translated into four translation actions, namely, up, down, left and right. When the translation processing is completed, the image matching is performed, and processed image data is compared with the original template mark image one by one, to obtain a corresponding image difference.

Different binary thresholds are used to perform the binarization processing on a segmented image. The above operations are repeated until all the cycles are completed, and the minimum image difference is calculated. The minimum image difference represents an error between the image acquired by the image acquisition device 400 and the template mark image.

The authenticity of the filter cartridge 300 can be determined by comparing the image difference calculated between the second mark sub-image and the template mark sub-image with a predetermined difference threshold. If the image difference is close to a predetermined error threshold and the authenticity cannot be determined during identification, the image may be directly uploaded to a server for higher-level identification to improve an identification rate.

The embodiments of the present disclosure further provide an anti-counterfeiting identification device of the filter cartridge.

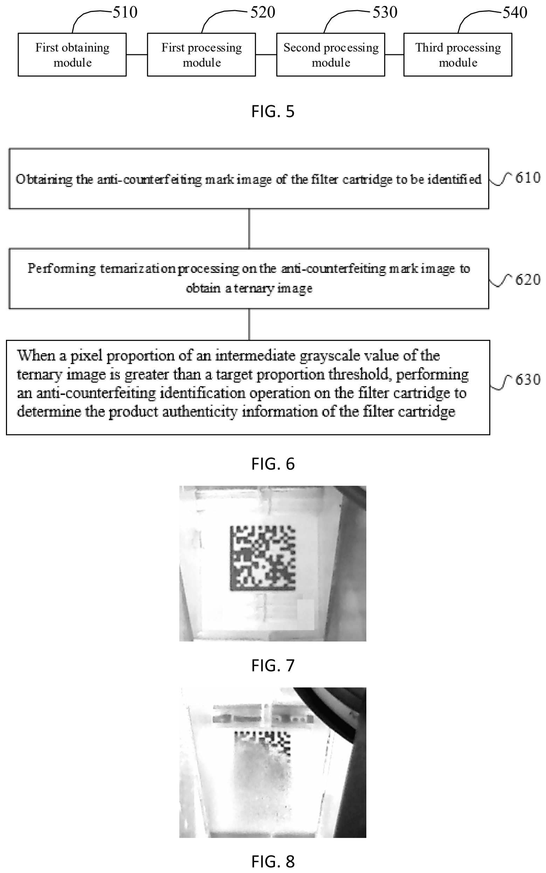

As illustrated in FIG. 5, the anti-counterfeiting identification device of the filter cartridge comprises: an obtaining module 510 configured to obtain the first filter cartridge image of the filter cartridge 300 to be identified, the first filter cartridge image being the YUV image and comprising the anti-counterfeiting mark of the filter cartridge 300; a first processing module 520 configured to obtain, based on the grayscale data of the first filter cartridge image, the second filter cartridge image; a second processing module 530 configured to crop the anti-counterfeiting mark image from the second filter cartridge image; and a third processing module 540 configured to compare the anti-counterfeiting mark image with the template mark image to determine the authenticity information of the filter cartridge 300.

According to the anti-counterfeiting identification device of the filter cartridge provided in the embodiments of the present disclosure, by acquiring the first filter cartridge image, extracting the grayscale data to obtain the second filter cartridge image, cropping the second filter cartridge image, obtaining the anti-counterfeiting mark image, and comparing the anti-counterfeiting mark image with the template mark image, the authenticity of the filter cartridge 300 is determined. In this way, the requirements for the image processor can be effectively reduced, and the anti-counterfeiting identification of the filter cartridge can be realized by using the microcontroller unit with the small random access memory and the low cost, effectively reducing the cost of the anti-counterfeiting identification of the filter cartridge.

In some embodiments, the third processing module 540 is configured to perform the image segmentation processing on the anti-counterfeiting mark image based on the grayscale information to obtain the first mark image; perform the binarization processing and the rotation processing on the first mark image to obtain the binary image; perform, based on the mark dimension, the image segmentation processing on the binary image to obtain the plurality of first mark sub-images; perform the translation processing on the plurality of first mark sub-images to obtain the plurality of second mark sub-images corresponding to the second mark image; and comparing the second mark image with the template mark image to determine the authenticity information of the product.

In some embodiments, the third processing module 540 is configured to perform, based on the first mark image, the binarization processing by iterating over the binary thresholds within the binary threshold range, and perform the rotation processing by iterating over the rotation angles within the rotation angle range.

In some embodiments, the third processing module 540 is further configured to perform, based on the first mark sub-image, the translation processing by iterating over the translation actions within the set of translation actions.

In some embodiments, the third processing module 540 is further configured to compare the plurality of second mark sub-images of the second mark image with the plurality of template mark sub-images of the template mark image one by one, to obtain the image difference between the second mark image and the template mark image; and determine, based on the image difference corresponding to the second mark image, the authenticity information of the product.

In some embodiments, the third processing module 540 is further configured to obtain the plurality of second mark images; and determine, based on the minimum image difference among the image differences of the plurality of second mark images, the authenticity information of the product.

In some embodiments, the second processing module 530 is further configured to determine, based on the target grayscale threshold, the anti-counterfeiting mark boundary in the second filter cartridge image; and crop, based on the anti-counterfeiting mark boundary and the dimension information of the anti-counterfeiting mark, the second filter cartridge image to obtain the anti-counterfeiting mark image.

The embodiments of the present disclosure further provide a water purification apparatus comprising the filter cartridge 300 and an anti-counterfeiting identification system. The anti-counterfeiting identification system comprises the image acquisition device 400 and the microcontroller unit. The image acquisition device 400 is electrically connected to the microcontroller unit.

In this embodiment, the image acquisition device 400 is configured to acquire the first filter cartridge image of the filter cartridge 300. A flash memory of the microcontroller unit is configured to store the second filter cartridge image. The second filter cartridge image is obtained based on the grayscale data of the first filter cartridge image. The microcontroller unit is configured to perform, based on the above anti-counterfeiting identification method of the filter cartridge, the anti-counterfeiting identification on the filter cartridge 300.

In some embodiments, the anti-counterfeiting identification system may comprise the anti-counterfeiting identification device of the filter cartridge illustrated in FIG. 5.

According to the water purification apparatus provided in the embodiments of the present disclosure, by acquiring the first filter cartridge image, extracting the grayscale data to obtain the second filter cartridge image, cropping the second filter cartridge image, obtaining the anti-counterfeiting mark image, and comparing the anti-counterfeiting mark image with the template mark image, the authenticity of the filter cartridge is determined. In this way, the requirements for the image processor can be effectively reduced, and the anti-counterfeiting identification of the filter cartridge can be realized by using the microcontroller unit with the small random access memory and the low cost, effectively reducing the cost of the anti-counterfeiting identification of the filter cartridge.

It should be understood that moisture regain or water leakage may occur inside the water purification apparatus, which may cause a lens surface of the image acquisition device 400 to become fogged, resulting in affected image quality and inability to perform the anti-counterfeiting identification.

As illustrated in FIG. 6, the present disclosure further provides an anti-counterfeiting identification method of the filter cartridge. The method comprises block 610 to block 630. The method can accurately identify a fogging situation and perform a corresponding anti-counterfeiting identification operation without a need to improve the lens, which helps to reduce the cost of the anti-counterfeiting identification of the filter cartridge.

At block 610, the anti-counterfeiting mark image of the filter cartridge 300 to be identified is obtained.

At this block, the anti-counterfeiting mark image of the filter cartridge 300 may be acquired by the image acquisition device 400. The anti-counterfeiting mark image may be an image that has been cropped and processed.

At block 620, ternarization processing is performed on the anti-counterfeiting mark image to obtain a ternary image.

It should be understood that, when the lens surface of the image acquisition device 400 is not fogged, the anti-counterfeiting mark image acquired by the image acquisition device 400 comprises an anti-counterfeiting mark with a clear boundary. When the lens surface of the image acquisition device 400 is fogged, the acquired anti-counterfeiting mark image will be relatively blurred.

Taking the anti-counterfeiting mark of the filter cartridge 300 as a QR code as an example.

As illustrated in FIG. 7, the lens surface of the image acquisition device 400 is not fogged. The anti-counterfeiting mark image acquired by the image acquisition device 400 comprises a QR code with a clear boundary, and all small squares with distinct black and white can be displayed.

As illustrated in FIG. 8, the lens surface of the image acquisition device 400 is fogged. The anti-counterfeiting mark image acquired by the image acquisition device 400 is blurred, and only part of the small squares with distinct black and white can be displayed.

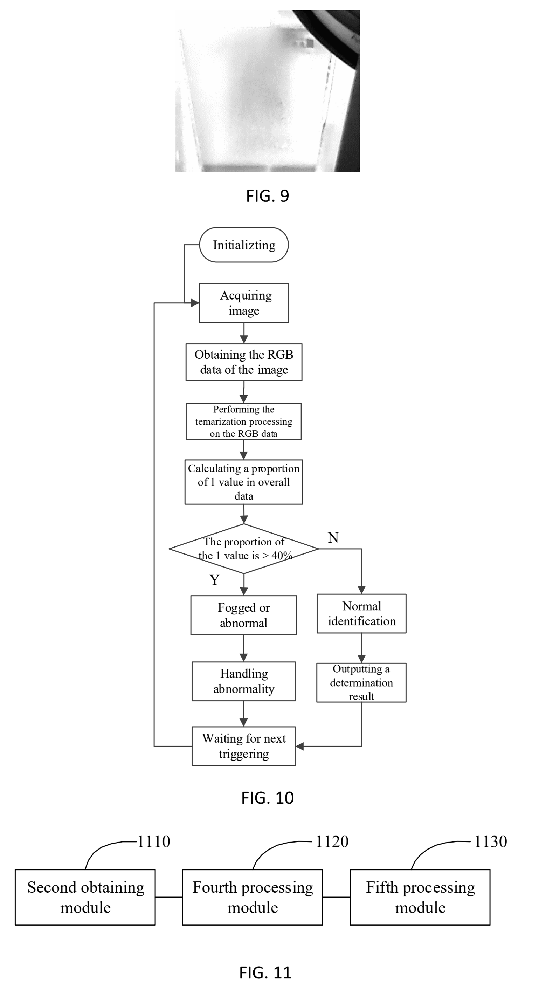

As illustrated in FIG. 9, the lens surface of the image acquisition device 400 is severely fogged. The anti-counterfeiting mark image acquired by the image acquisition device 400 is blurred, and the small squares with distinct black and white cannot be displayed.

At this block, a first pixel threshold and a second pixel threshold may be predetermined. The first pixel threshold is less than the second pixel threshold. The first pixel threshold and the second pixel threshold are used to perform the ternarization processing on the anti-counterfeiting mark image.

In this embodiment, pixel values in the anti-counterfeiting mark image that are less than or equal to the first pixel threshold are set as a minimum grayscale value (e.g., 0). Pixel values between the first pixel threshold and the second pixel threshold are set as an intermediate grayscale value (e.g., 1). Pixel values that are greater than or equal to the second pixel threshold are set as a maximum grayscale value (e.g., 2).

Taking the anti-counterfeiting mark of the filter cartridge 300 as the QR code as an example, the ternarization processing is performed by performing interval division based on RGB data of the anti-counterfeiting mark image.

In actual implementation, when the lens surface of the image acquisition device 400 is normal, RGB data of black and white squares in the acquired anti-counterfeiting mark image fluctuates within a small range. For example, RGB data of a black square is less than 20, and RGB data of a white square is greater than 240.

When the lens surface of the image acquisition device 400 is fogged, the acquired anti-counterfeiting mark image becomes partially or completely blurred to varying degrees, resulting in a series of intermediate RGB data ranging from 20 to 240.

In this embodiment, the ternarization processing is performed on the anti-counterfeiting mark image. The grayscale value at positions of black squares with the RGB data less than 20 is set to 0. The grayscale value at positions of white squares with the RGB data greater than 240 is set to 2. The grayscale value at positions with the intermediate RGB data is set to 1.

At block 630, when a pixel proportion of an intermediate grayscale value of the ternary image is greater than a target proportion threshold, an anti-counterfeiting identification operation is performed on the filter cartridge 300 to determine the product authenticity information of the filter cartridge 300.

It should be noted that, the number of pixels in the image acquired by the image acquisition device 400 is fixed. For example, the anti-counterfeiting mark image comprises 64×64 pixels. Whether the lens surface of the image acquisition device 400 is blurred is determined based on the pixel proportion of the intermediate grayscale value of the ternary image, that is, a proportion of the intermediate grayscale value of the ternary image to a total number of pixels.

In actual implementation, the target proportion threshold may be predetermined based on actual test data. When the pixel proportion of the intermediate grayscale value is greater than the target proportion threshold, the anti-counterfeiting mark image is blurred, indicating that the lens surface of the image acquisition device 400 is fogged.

For example, the target proportion threshold is 40%. When the pixel proportion of the intermediate grayscale value of the ternary image is greater than 40%, it is indicated that the lens surface of the image acquisition device 400 is fogged.

In this embodiment, when it is determined that the lens surface of the image acquisition device 40 is fogged, the corresponding anti-counterfeiting identification operation is performed on the filter cartridge 300 to determine the authenticity of filter cartridge 300.

In actual implementation, internal fogging of the water purification apparatus has a low occurrence frequency, and the timeliness requirements for identifying the authenticity of the filter cartridge are not high. The anti-counterfeiting mark image may be acquired by the low-cost image acquisition device 400. When it is determined that the lens is fogged, the corresponding anti-counterfeiting identification operation is performed. There is no need to use a lens with anti-fogging material to meet anti-counterfeiting identification requirements of the filter cartridge.

It should be noted that, for some counterfeit filter cartridges 300 with missing surface marks or completely without marks, the ternarization processing is performed on the anti-counterfeiting mark image. Whether fogging has occurred is determined based on whether the pixel proportion of the intermediate grayscale value is greater than the target proportion threshold. In this way, a counterfeit situation and a fogging situation can be accurately distinguished as an image of the counterfeit filter cartridge 300 has no pixels corresponding to the intermediate grayscale value.

According to the anti-counterfeiting identification method of the filter cartridge in the embodiments of the present disclosure, by performing the ternarization processing on the anti-counterfeiting mark image, the fogging situation can be accurately identified based on the pixel proportion of the intermediate grayscale value of the ternary image. The corresponding anti-counterfeiting identification operation is performed without a need to improve the lens, which helps to reduce the cost of the anti-counterfeiting identification of the filter cartridge.

In actual implementation, subsequent to determining that the lens of the image acquisition device 400 is fogged based on the pixel proportion of the intermediate grayscale value of the ternary image, the product authenticity information of the filter cartridge 300 can be determined through at least two anti-counterfeiting identification operations as follows.

First, no authenticity determination is performed initially, and a plurality of subsequent detections are performed.

In some embodiments, the performing the anti-counterfeiting identification operation on the filter cartridge 300 to determine the product authenticity information of the filter cartridge 300 may comprise: obtaining a plurality of anti-counterfeiting mark images again at a first time interval; performing the ternarization processing on each of the plurality of anti-counterfeiting mark images to obtain a plurality of new ternary images; and when at least one target ternary image is comprised in the plurality of new ternary images, determining, based on the anti-counterfeiting mark image corresponding to the target ternary image, the authenticity information of the product, the target ternary image being a ternary image that the pixel proportion of the intermediate grayscale value is less than or equal to the target proportion threshold.

In this embodiment, fogging of the lens of the image acquisition device 400 is determined based on an image that is obtained by performing the ternarization processing on the currently obtained image, and the authenticity determination of the filter cartridge 300 is not performed currently.

It should be understood that, the fogging of the lens may change with changes of the environment. Currently, the lens is fogged, and after a period of time, the fogging may dissipate.

Subsequently, the plurality of anti-counterfeiting mark images are continuously obtained at the first time interval and the ternarization processing is performed. As long as at least one ternary image (i.e. the target ternary image) in the plurality of new ternary images can be used to determine that the lens is no longer fogged, the anti-counterfeiting mark image corresponding to the target ternary image is used to perform the anti-counterfeiting identification and determine the authenticity of the filter cartridge 300.

For example, the first time interval is 6 hours.

When the lens of the image acquisition device 400 is fogged, the authenticity of the filter cartridge 300 is not determined currently. Subsequently, one anti-counterfeiting mark image is obtained every 6 hours, for a total of 20 anti-counterfeiting mark images. The ternarization processing is performed on the 20 anti-counterfeiting mark images. When the pixel proportion of the intermediate grayscale value of at least one ternary image in the 20 new ternary images is less than or equal to the target proportion threshold, the anti-counterfeiting identification can be performed based on the corresponding anti-counterfeiting mark image.

In some embodiments, subsequent to determining, based on the anti-counterfeiting mark image corresponding to the target ternary image, the authenticity information of the product, the anti-counterfeiting identification method of the filter cartridge may further comprise: obtaining the anti-counterfeiting mark image again at a second time interval to perform the anti-counterfeiting identification on the filter cartridge 300, the second time interval being greater than the first time interval.

In this embodiment, when the anti-counterfeiting identification is performed based on the anti-counterfeiting mark image corresponding to the target ternary image, a frequency of the anti-counterfeiting identification operation can be reduced, for example, the first time interval is 6 hours and the second time interval is 24 hours.

It should be understood that, by periodically obtaining the anti-counterfeiting mark image at a predetermined second time interval, not only can the authenticity of the filter cartridge 300 be monitored in real time, but also the fogging of the lens of the image acquisition device 400 and the moisture regain or the water leakage inside the water purification apparatus can be determined based on the ternary image corresponding to the anti-counterfeiting mark image.

Second, the authenticity determination is not performed locally, but performed in a cloud.

In some embodiments, the performing the anti-counterfeiting identification operation on the filter cartridge 300 to determine the product authenticity information of the filter cartridge 300 may comprise: transmitting the anti-counterfeiting mark image to a server; and receiving the authenticity information of the product transmitted by the server.

In this embodiment, subsequent to determining that the lens of the image acquisition device 400 is fogged, the water purification apparatus or other terminal does not determine the authenticity of the current filter cartridge 300. Instead, the current anti-counterfeiting mark image is transmitted to a cloud server. Powerful computing capability of the server is utilized to restore and analyze blurred data, and the authenticity of filter cartridge 300 is determined.

It should be noted that, only when it is determined that the lens of the image acquisition device 400 is fogged based on the ternary image corresponding to the anti-counterfeiting mark image, the anti-counterfeiting identification operation of performing the plurality of subsequent detections or performing the authenticity determination in the cloud is adopted. For a clear anti-counterfeiting mark image, the authenticity of the filter cartridge 300 can be directly determined.

In some embodiments, subsequent to obtaining the ternary image, the anti-counterfeiting identification method of the filter cartridge may further comprise: determining, based on the anti-counterfeiting mark image, the authenticity information of the product, when the pixel proportion of the intermediate grayscale value of the ternary image is less than or equal to the target proportion threshold.

In this embodiment, when the pixel proportion of the intermediate grayscale value of the ternary image is less than or equal to the target proportion threshold, it is indicated that the lens of the image acquisition device 400 is not fogged, and the anti-counterfeiting identification can be directly performed. The authenticity information of the product can be determined using the current anti-counterfeiting mark image.

In some embodiments, the anti-counterfeiting mark image is a color image. Subsequent to obtaining the anti-counterfeiting mark image of the filter cartridge 300 to be identified, and prior to performing the ternarization processing on the anti-counterfeiting mark image, the anti-counterfeiting identification method of the filter cartridge further comprises: converting the anti-counterfeiting mark image into a grayscale image.

It should be understood that, the color image is also called an RGB image, which has three channels of color components: R, G, and B. Subsequent to converting the color image of the anti-counterfeiting mark image into the grayscale image, there is only a single channel of the color component, which can effectively improve a processing speed of the ternarization processing on the anti-counterfeiting mark image.

An embodiment is introduced below.

As illustrated in FIG. 10, initialization is performed, and the anti-counterfeiting mark image is obtained. The RGB data of the image is obtained. The ternarization processing is performed on the RGB data. The grayscale value at the positions of the black squares with the RGB data less than 20 is set to 0. The grayscale value at the positions of the white squares with the RGB data greater than 240 is set to 2. The grayscale value at the positions with the intermediate RGB data is set to 1.

A proportion of 1 value in overall data is calculated, that is, the proportion of the intermediate grayscale value of the ternary image to the total number of pixels. When the proportion of the 1 value is > 40%, it is determined that the lens of the image acquisition device 400 is fogged or abnormal. The plurality of subsequent detections are performed, or abnormality handling and the anti-counterfeiting identification operation for the authenticity determination are performed on the cloud.

When the proportion of the 1 value is ≤40%, it is determined that the lens of the image acquisition device 400 is normal, normal identification is performed, a determination result is output, and next triggering of image obtaining is waited for.

In this embodiment, by performing the ternarization processing on the anti-counterfeiting mark image, the fogging situation is accurately identified based on the pixel proportion of the intermediate grayscale value of the ternary image, and the corresponding anti-counterfeiting identification operation is performed. There is no need to improve the lens, which helps to reduce the cost of anti-counterfeiting identification of the filter cartridge.

The embodiments of the present disclosure further provide an anti-counterfeiting identification device of the filter cartridge.

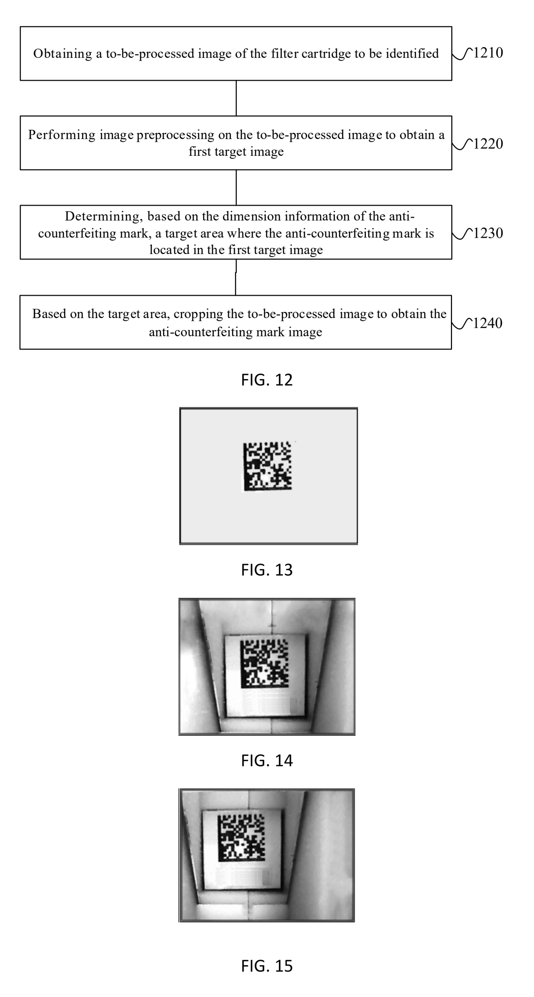

As illustrated in FIG. 11, the anti-counterfeiting identification device of the filter cartridge comprises: a second obtaining module 1110 configured to obtain the anti-counterfeiting mark image of the filter cartridge 300 to be identified; a fourth processing module 1120 configured to perform the ternarization processing on the anti-counterfeiting mark image to obtain the ternary image; and a fifth processing module 1130 configured to perform the anti-counterfeiting identification operation on the filter cartridge 300 when the pixel proportion of the intermediate grayscale value of the ternary image is greater than the target proportion threshold, and determine the product authenticity information of the filter cartridge 300.

According to the anti-counterfeiting identification device of the filter cartridge provided in the embodiments of the present disclosure, by performing the ternarization processing on the anti-counterfeiting mark image, the fogging situation can be accurately identified based on the pixel proportion of the intermediate grayscale value of the ternary image. The corresponding anti-counterfeiting identification operation is performed without the need to improve the lens, which helps to reduce the cost of the anti-counterfeiting identification of the filter cartridge.

In some embodiments, the fifth processing module 1130 is further configured to obtain the plurality of anti-counterfeiting mark images again at the first time interval; perform the ternarization processing on each of the plurality of anti-counterfeiting mark images to obtain the plurality of new ternary images; and when at least one target ternary image is comprised in the plurality of new ternary images, determine, based on the anti-counterfeiting mark image corresponding to the target ternary image, the authenticity information of the product, the target ternary image being the ternary image that the pixel proportion of the intermediate grayscale value is less than or equal to the target proportion threshold.

In some embodiments, the fifth processing module 1130 is further configured to obtain the anti-counterfeiting mark image again at the second time interval to perform the anti-counterfeiting identification on the filter cartridge 300, subsequent to determining, based on the anti-counterfeiting mark image corresponding to the target ternary image, the authenticity information of the product. The second time interval is greater than the first time interval.

In some embodiments, the fifth processing module 1130 is further configured to transmit the anti-counterfeiting mark image to the server; and receive the authenticity information of the product transmitted by the server.

In some embodiments, the fifth processing module 1130 is further configured to determine, based on the anti-counterfeiting mark image, the authenticity information of the product, when the pixel proportion of the intermediate grayscale value of the ternary image is less than or equal to the target proportion threshold.

In some embodiments, the anti-counterfeiting mark image is the color image. The fourth processing module 1120 is further configured to convert the anti-counterfeiting mark image into the grayscale image.

The embodiments of the present disclosure further provide a water purification apparatus. The water purification apparatus comprises the filter cartridge 300 and the anti-counterfeiting identification system.

In this embodiment, the anti-counterfeiting identification system is configured to perform the anti-counterfeiting identification on the filter cartridge 300 based on the anti-counterfeiting identification method of the filter cartridge. The anti-counterfeiting identification method of the filter cartridge may comprise: obtaining the anti-counterfeiting mark image of the filter cartridge 300 to be identified; performing the ternarization processing on the anti-counterfeiting mark image to obtain the ternary image; and performing the anti-counterfeiting identification operation on the filter cartridge 300 to determine the product authenticity information of the filter cartridge 300, when the pixel proportion of the intermediate grayscale value of the ternary image is greater than the target proportion threshold.

In some embodiments, the anti-counterfeiting identification system may comprise the anti-counterfeiting identification device of the filter cartridge illustrated in FIG. 11.

According to the water purification apparatus provided in the embodiments of the present disclosure, by performing the ternarization processing on the anti-counterfeiting mark image, the fogging situation can be accurately identified based on the pixel proportion of the intermediate grayscale value of the ternary image. The corresponding anti-counterfeiting identification operation is performed without the need to improve the lens, which helps to reduce the cost of the anti-counterfeiting identification of the filter cartridge.

It should be understood that, low-cost anti-counterfeiting identification of the filter cartridge 300 can be achieved by using a low-cost processor. For the low-cost processor, its internal storage space is not too large and cannot process a complete image acquired by a camera. External expansion of a storage space will increase the cost of anti-counterfeiting identification.

As illustrated in FIG. 12, the present disclosure further provides an anti-counterfeiting identification method of the filter cartridge. The method comprises block 1210 to block 1240. The method can accurately locate key positions of the image of the filter cartridge 300, crop the image based on positioning information, and perform the anti-counterfeiting identification, which helps to achieve the low-cost anti-counterfeiting identification of the filter cartridge.

At block 1210, a to-be-processed image of the filter cartridge 300 to be identified is obtained.

The to-be-processed image comprises the anti-counterfeiting mark of the filter cartridge 300. The to-be-processed image may be an image acquired by the image acquisition device 400.

As illustrated in FIG. 13, if only the anti-counterfeiting mark has a clear boundary in the to-be-processed image, a method of searching a black edge can be used to identify a target area where the anti-counterfeiting mark is located, or data of a center part of the image can be directly captured.

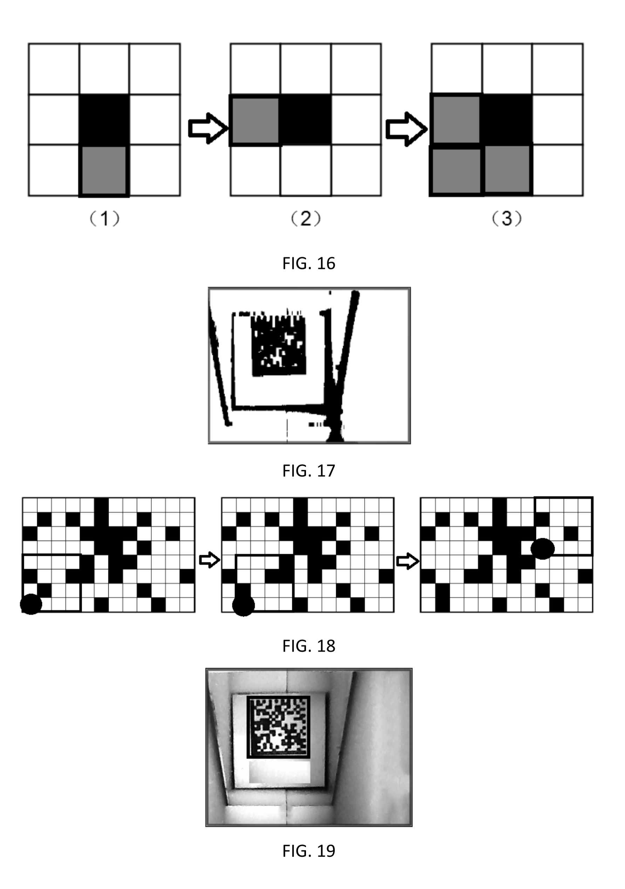

In actual scenarios, as illustrated in FIG. 14, many interference factors exist in the to-be-processed image, and searching the black edge cannot accurately identify the target area where the anti-counterfeiting mark is located. As illustrated in FIG. 15, an acquisition angle of the to-be-processed image is offset, and effective image data of the anti-counterfeiting mark cannot be obtained by capturing the data of the central part of the image.

At block 1220, image preprocessing is performed on the to-be-processed image to obtain a first target image.

A difference degree between an anti-counterfeiting mark area and a background area in the first target image is greater than a difference degree between an anti-counterfeiting mark area and a background area in the to-be-processed image.

At this block, the difference degree between the anti-counterfeiting mark area and the background area in the to-be-processed image is increased through image preprocessing, in such a manner that the first target image is obtained, and the anti-counterfeiting mark area in the first target image is easier to be identified.

It should be noted that the difference degree between the anti-counterfeiting mark area and the background area in the image refers to a difference degree between image features of the anti-counterfeiting mark area and image features of the background area. The difference degree between the anti-counterfeiting mark area and the background area in the to-be-processed image can be increased through image processing methods such as pixel expansion, contrast adjustment, and binarization, which helps to accurately locate the anti-counterfeiting mark area in the image.

At block 1230, based on the dimension information of the anti-counterfeiting mark, a target area where the anti-counterfeiting mark is located in the first target image is determined.

At this block, based on the dimension information of the anti-counterfeiting mark, in the first target image where the anti-counterfeiting mark area is significantly different from the background area, the target area where the anti-counterfeiting mark is located is located.

For example, the anti-counterfeiting mark is a 90x90-pixel square QR code. Taking a 90x90-pixel square as a reference, the target area where the anti-counterfeiting mark is located and which matches the square of this dimension is searched in the first target image.

At block 1240, based on the target area, the to-be-processed image is cropped to obtain the anti-counterfeiting mark image.

The anti-counterfeiting mark image is used to determine the product authenticity information of the filter cartridge 300.

In this embodiment, based on the target area where the anti-counterfeiting mark is located, the first target image is cropped to obtain the anti-counterfeiting mark image corresponding to the target area where the anti-counterfeiting mark is located. A dimension of the image that has been cropped is greatly reduced, and the anti-counterfeiting identification of the filter cartridge 300 can also be achieved using the low-cost processor.

According to the anti-counterfeiting identification method of the filter cartridge provided in the embodiments of the present disclosure, by performing the image preprocessing on the to-be-processed image, the difference degree between the anti-counterfeiting mark area and the background area in the to-be-processed image is increased, which helps to accurately locate the anti-counterfeiting mark area in the image. Based on the located target area, the image is cropped and the anti-counterfeiting identification is performed, in such a manner that the low-cost anti-counterfeiting identification of the filter cartridge can be achieved.

In some embodiments, block 1220 may comprise: performing binarization processing on the to-be-processed image to obtain a target binary image; and expanding and filling, based on a pixel value of each pixel in the target binary image, pixels adjacent to each pixel in the target binary image with solid color pixels to obtain the first target image.

In this embodiment, the image preprocessing of the to-be-processed image comprises the binarization processing and the pixel expansion and filling. Through the binarization processing and the pixel expansion and filling, the difference degree between the anti-counterfeiting mark area and the background area in the to-be-processed image is effectively increased to obtain the first target image.

In actual implementation, based on a predetermined binary threshold, the binarization processing is performed on the to-be-processed image. The anti-counterfeiting mark area and the background area are preliminarily separated to obtain the target binary image.

Base on the pixel value of each pixel in the target binary image, the adjacent pixels are filled with solid color pixels to highlight a boundary between the anti-counterfeiting mark area and the background area, increasing the difference degree between the anti-counterfeiting mark area and the background area in the to-be-processed image.

For example, as illustrated in FIG. 16, the pixels of the target binary image are expanded, and the pixel values of the pixels adjacent to a certain pixel of the target binary image are read one by one in directions of downward, leftward, and diagonal. Threshold determination is performed to determine whether these adjacent pixels are black dots. If these adjacent pixels are black dots, black pixels are used for filling, until the expansion processing of an entire target binary image is completed.

The to-be-processed image as illustrated in FIG. 15 is subjected to the image preprocessing of the binarization processing and the pixel expansion and filling to obtain the first target image as illustrated in FIG. 17. The difference degree between the anti-counterfeiting mark area and the background area in the first target image is more obvious.

In some embodiments, an expansion and filling direction of the solid color pixels is determined based on distribution characteristics of the background area in the target binary image.

It should be understood that the background area is interference printing that affects identification and positioning of the anti-counterfeiting mark area. The extension and filling direction of the solid color pixels is determined based on the distribution characteristics of the background area, which effectively increases the difference degree between the anti-counterfeiting mark area and the background area.

For example, as illustrated in FIG. 15, interference factors in the background area are a large number of vertical stripes. By expanding in the expansion and filling direction of the black pixels as illustrated in FIG. 16, a first target image can be obtained in which the difference degree between the anti-counterfeiting mark area and the background area is increased.

In some embodiments, block 1230 may comprise: taking a pixel of the first target image as a reference point, iterating over all the pixels of the first target image in sequence, obtaining a count value of a target pixel in an area corresponding to dimension information in the first target image, where the target pixel is a pixel whose pixel value is greater than a target pixel threshold; and determining, based on the count value of the target pixel, the target area.

In this embodiment, based on the dimension information of the anti-counterfeiting mark, iterating over all the pixels of the first target image may start from a pixel at a lower left corner of the first target image. With each pixel taken as the reference point, the count value of the target pixel in the area corresponding to the dimension information is calculated.

For example, the target pixel is a black pixel and the anti-counterfeiting mark is a 90x90-pixel square. As illustrated in FIG. 18, starting from the pixel at the lower left corner, a count value of the black pixel in a 90x90-pixel image is calculated. Subsequently, the reference point is moved right by one pixel, and the count value of the black pixel in the 90x90-pixel image is continued to be calculated, until all the pixels of the first target image are iterated over.

In some embodiments, an area with a largest count value of the target pixels in the first target image is determined as the target area.

In this embodiment, subsequent to obtaining the count value of the target pixel in the area corresponding to each dimension information of the first target image, the area with the largest count value is taken as the target area. As illustrated in FIG. 19, the to-be-processed image may be cropped based on the target area (a black border next to the QR code) to obtain the anti-counterfeiting mark image for anti-counterfeiting identification.

In some embodiments, subsequent to obtaining the count value of the target pixel in the area corresponding to the dimension information in the first target image, the anti-counterfeiting identification method of the filter cartridge further comprises: when there are a plurality of areas in the first target image where the count value of the target pixel is greater than a target count threshold, transmitting at least one of the to-be-processed image or the first target image to the server, to enable the server to perform the anti-counterfeiting identification on the filter cartridge 300.

The target count threshold may be a critical count value determined based on a pixel proportion of the target pixel in the anti-counterfeiting mark. When the count value of the target pixel in a certain area of the first target image is greater than the target count threshold, it is indicated that this area may be an area where the anti-counterfeiting mark is located.

In this embodiment, there are the plurality of areas in the first target image where the count value of the target pixel is greater than the target count threshold, and an exact position of the target area cannot be accurately located. The to-be-processed image and/or the first target image may be transmitted to the server, and the powerful computing capacity of the server can be utilized to perform the anti-counterfeiting identification, thereby improving identification accuracy.

An embodiment is introduced below.

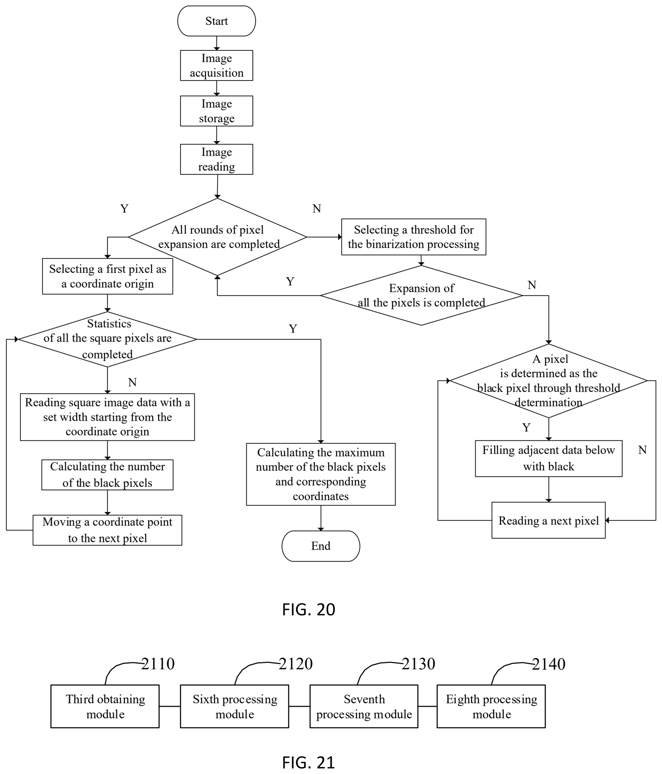

As illustrated in FIG. 20, when the image acquisition device 400 acquires a to-be-processed image, the image may be stored in an on-chip flash of a micro processing unit, and the image is read from the on-chip flash to perform the image preprocessing.

A threshold is selected for the binarization processing, the binarization processing is performed on the to-be-processed image, and image preprocessing of expanding the black pixel is performed. For a pixel determined as the black pixel through threshold determination, adjacent data below is filled with black, and a next pixel is read until all the filling is completed.

Subsequent to completing the image preprocessing, black pixel counting is performed on the area corresponding to the dimension information of the anti-counterfeiting mark in the first target image. A first pixel is selected as a coordinate origin, and square image data with a set width starting from the coordinate origin is read. The number of the black pixels is calculated, and a coordinate point is moved to the next pixel, until statistics of all the square pixels are completed. The area with a largest count value of the black pixel is determined as the target area where the anti-counterfeiting mark is located.

In this embodiment, by performing the image preprocessing on the to-be-processed image, increasing the difference degree between the anti-counterfeiting mark area and the background area in the to-be-processed image, accurately locating the anti-counterfeiting mark area in the image, and cropping the image based on the located target area, the low-cost anti-counterfeiting identification of the filter cartridge can be achieved.

The embodiments of the present disclosure further provide an anti-counterfeiting identification device of the filter cartridge.

As illustrated in FIG. 21, the anti-counterfeiting identification device of the filter cartridge comprises: a third obtaining module 2110 configured to obtain the to-be-processed image of the filter cartridge 300 to be identified, the to-be-processed image comprising the anti-counterfeiting mark of the filter cartridge 300; a sixth processing module 2120 configured to perform the image preprocessing on the to-be-processed image to obtain the first target image, the difference degree between the anti-counterfeiting mark area and the background area in the first target image is greater than the difference degree between the anti-counterfeiting mark area and the background area in the to-be-processed image; a seventh processing module 2130 configured to determine, based on the dimension information of the anti-counterfeiting mark, the target area where the anti-counterfeiting mark is located in the first target image; and an eighth processing module 2140 configured to cropping, based on the target area, the to-be-processed image to obtain the anti-counterfeiting mark image, the anti-counterfeiting mark image being used to determine the product authenticity information of the filter cartridge 300.

According to the anti-counterfeiting identification device of the filter cartridge provided in the embodiments of the present disclosure, by performing the image preprocessing on the to-be-processed image and increasing the difference degree between the anti-counterfeiting mark area and the background area in the to-be-processed image, it is helpful to accurately locate the anti-counterfeiting mark area in the image. The image is cropped based on the located target area and the anti-counterfeiting identification is performed, in such a manner that the low-cost anti-counterfeiting identification of the filter cartridge can be achieved.

In some embodiments, the sixth processing module 2120 is further configured to perform the binarization processing on the to-be-processed image to obtain the target binary image; and expand and fill, based on the pixel value of each pixel in the target binary image, the pixels adjacent to each pixel in the target binary image with the solid color pixels to obtain the first target image.

In some embodiments, the expansion and filling direction of the solid color pixels is determined based on the distribution characteristics of the background area in the target binary image.

In some embodiments, the seventh processing module 2130 is further configured to take the pixel of the first target image as the reference point, iterate over all the pixels of the first target image in sequence, obtain the count value of the target pixel in the area corresponding to dimension information in the first target image, where the target pixel is the pixel whose pixel value is greater than the target pixel threshold; and determine, based on the count value of the target pixel, the target area.

In some embodiments, the seventh processing module 2130 is further configured to determine the area with the largest count value of the target pixel in the first target image as the target area.

In some embodiments, when there are the plurality of areas in the first target image where the count value of the target pixel is greater than the target count threshold, the seventh processing module 2130 is further configured to transmit at least one of the to-be-processed image or the first target image to the server, to enable the server to perform the anti-counterfeiting identification on the filter cartridge 300.

The embodiments of the present disclosure further provide a water purification apparatus comprising the filter cartridge 300 and the anti-counterfeiting identification system.

In this embodiment, the anti-counterfeiting identification system is configured to perform the anti-counterfeiting identification on the filter cartridge 300 based on the anti-counterfeiting identification method of the filter cartridge. The anti-counterfeiting identification method of the filter cartridge may comprise: obtaining the to-be-processed image of the filter cartridge 300 to be identified, the to-be-processed image comprising the anti-counterfeiting mark of the filter cartridge 300; performing the image preprocessing on the to-be-processed image to obtain the first target image, the difference degree between the anti-counterfeiting mark area and the background area in the first target image being greater than the difference degree between the anti-counterfeiting mark area and the background area in the to-be-processed image; determining, based on the dimension information of the anti-counterfeiting mark, the target area where the anti-counterfeiting mark is located in the first target image; and cropping, based on the target area, the to-be-processed image, to obtain the anti-counterfeiting mark image, the anti-counterfeiting mark image being used to determine the product authenticity information of the filter cartridge 300.

In some embodiments, the anti-counterfeiting identification system may comprise the anti-counterfeiting identification device of the filter cartridge as illustrated in FIG. 21.

According to the water purification apparatus provided in the embodiments of the present disclosure, by performing the image preprocessing on the to-be-processed image and increasing the difference degree between the anti-counterfeiting mark area and the background area in the to-be-processed image, it is helpful to accurately locate the anti-counterfeiting mark area in the image. The image is cropped based on the located target area and the anti-counterfeiting identification is performed, in such a manner that the low-cost anti-counterfeiting identification of the filter cartridge can be achieved.

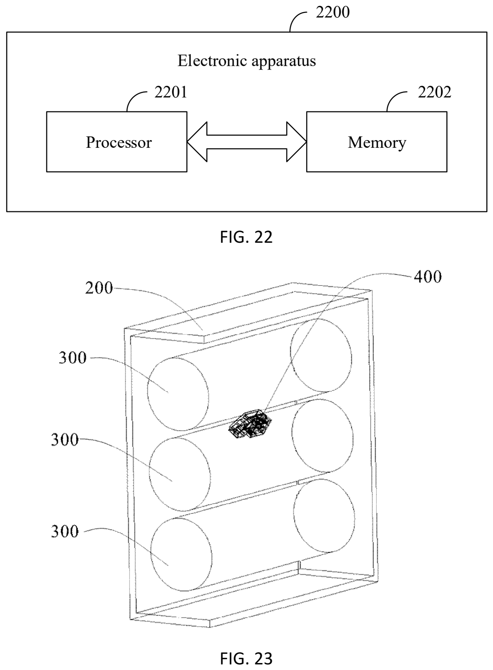

As illustrated in FIG. 22, the embodiments of the present disclosure further provide an electronic apparatus 2200 comprising a processor 2201, a memory 2202, and a computer program stored in the memory 2202 and executable by the processor 2101. The computer program, when executed by the processor 2201, implements each process of any one of the above-described embodiments of the anti-counterfeiting identification method of the filter cartridge, and the same technical effects can be achieved. To avoid repetition, detailed descriptions are omitted herein.

It should be noted that, the electronic apparatus in the embodiments of the present disclosure comprises the above-described mobile electronic apparatus and non-mobile electronic apparatus.

The embodiments of the present disclosure further provide a non-transitory computer-readable storage medium having a computer program stored thereon. The computer program, when executed by a processor, implements each process of any one of the above-described embodiments of the anti-counterfeiting identification method of the filter cartridge, and the same technical effects can be achieved. To avoid repetition, detailed descriptions are omitted herein.

The processor is the processor in the electronic apparatus described in the above embodiments. The readable-storage medium comprises a computer-readable storage medium, such as a computer read-only memory (ROM), a random access memory (RAM), a magnetic disk, or an optical disk.

The embodiments of the present disclosure further provide a computer program product comprising a computer program. The computer program, when executed by a processor, implements any one of the above-described anti-counterfeiting identification methods of the filter cartridge.

The processor is the processor in the electronic apparatus described in the above embodiments. The readable-storage medium comprises the computer-readable storage medium, such as the computer read-only memory (ROM), the random access memory (RAM), the magnetic disk, or the optical disk.

The embodiments of the present disclosure further provide a water purification apparatus. The water purification apparatus can reduce the cost of the anti-counterfeiting identification of the filter cartridge and simplify a replacement operation of the filter cartridge 300. It should be noted that the water purification apparatus can perform the anti-counterfeiting identification of the filter cartridge 300 based on any one of the above-described anti-counterfeiting identification methods of the filter cartridge 300.

In this embodiment, the water purification apparatus comprises a housing 200, the filter cartridge 300, the image acquisition device 400, a reset button, and a control board.

As illustrated in FIG. 23, the housing 200 defines an accommodation space. The filter cartridge 300 is located in the accommodation space. The control board is located in the accommodation space. The image acquisition device 400 is located in the accommodation space. The image acquisition device 400 faces towards an anti-counterfeiting mark area of the filter cartridge 300.

The image acquisition device 400 is configured to acquire an image of the anti-counterfeiting mark area of the filter cartridge 300, and output the image to the control board. The control board processes the image and performs the anti-counterfeiting identification on the filter cartridge 300.

The reset button is disposed at the housing 200 and configured to output, based on a received input, a reset button signal. The control board is electrically connected to the reset button and the image acquisition device 400. The control board is configured to control, based on the reset button signal, the image acquisition device 400 to acquire the image of the anti-counterfeiting mark area.

In this embodiment, a user may press the reset button. The control board receives the reset button signal and forwards the reset button signal to the image acquisition device 400. The image acquisition device 400 receives the signal and starts to acquire images. By providing the reset button, the images are acquired when the reset button signal is input. Compared with a solution of performing single photo identification at a certain frequency in the related art, a shooting frequency can be reduced and a service life of the device can be extended.

It should be noted that, the image acquisition device 400 is mounted in the housing 200 of the water purification apparatus. By comparing images of the anti-counterfeiting mark taken by the image acquisition device 400 before and after receiving the reset button signal, whether the filter cartridge 300 of the water purification apparatus has been replaced can be determined. If image data before and after receiving the reset button signal are inconsistent, it is indicated that the filter cartridge 300 has been replaced. The anti-counterfeiting identification is performed on a replaced filter cartridge 300, and the new filter cartridge 300 is determined to be genuine. The new filter cartridge 300 is reset, and a controller performs data binding based on an image of the anti-counterfeiting mark of the new filter cartridge 300. In this way, the replacement operation of the filter cartridge 300 is simplified.

In some embodiments, the image acquisition device 400 comprises a plurality of image acquisition units. The plurality of image acquisition units are arranged in one-to-one correspondence with a plurality of filter cartridges 300 of the water purification apparatus.

The image acquisition device 400 can simultaneously monitor the plurality of filter cartridges 300 in the water purification apparatus. The user only needs to input the reset button signal once to automatically identify the replaced filter cartridge 300 in the water purification apparatus and automatically reset the filter cartridge 300.

In actual implementation, when it is detected that the replaced filter cartridge 300 is counterfeit, a reset operation of pressing the reset button performed by the user does not take effect, and the water purification apparatus outputs information to remind the user that the filter cartridge 300 is counterfeit.

According to the water purification apparatus provided in the embodiments of the present disclosure, the image acquisition device 400 cooperates with the reset button at the housing 200, and the image of the anti-counterfeiting mark area of the filter cartridge 300 is acquired, in such a manner that the anti-counterfeiting identification and reset operations are performed. In this way, the cost of the anti-counterfeiting identification of the filter cartridge can be reduced, and the replacement operation of the filter cartridge 300 can be simplified.

In some embodiments, the water purification apparatus further comprises anti-counterfeiting information output device.

In this embodiment, the anti-counterfeiting information output device is disposed at the housing 200 and electrically connected to the control board. The anti-counterfeiting information output device is configured to output the product authenticity information of the filter cartridge 300.

The image acquisition device 400 acquires the image of the anti-counterfeiting mark area of the filter cartridge 300, and performs the anti-counterfeiting identification on the filter cartridge 300. When the filter cartridge 300 is identified as genuine, the anti-counterfeiting information output device can output information that the filter cartridge 300 is genuine, and the control board automatically resets the filter cartridge 300.

When the filter cartridge 300 is identified as counterfeit, the anti-counterfeiting information output device can output information that the filter cartridge 300 is counterfeit to remind the user that the filter cartridge 300 is counterfeit, and the reset button signal input by the user does not take effect.

In actual implementation, the anti-counterfeiting information output device may be a device that can output information, such as a display, a speaker, etc.

In some embodiments, the anti-counterfeiting information output device comprises an anti-counterfeiting indicator light configured to light up when the filter cartridge 300 is identified as counterfeit.

In this embodiment, when the filter cartridge 300 is identified as counterfeit, the anti-counterfeiting indicator light lights up to remind the user that the filter cartridge 300 is counterfeit.

In some embodiments, the image acquisition device 400 comprises an image acquisition component and a light supplement component.

In this embodiment, the image acquisition device 400 is disposed in the accommodation space of the housing 200. The light supplement component can supplement light for the image acquisition component to ensure that the image acquisition device 400 can acquire clear images.

In some embodiments, the water purification apparatus further comprises a communication module.

In this embodiment, the communication module is electrically connected to the control board. The control board is configured to communicate with a server through the communication module.

In actual implementation, the control board may transmit the image acquired by the image acquisition device 400 to the server, and the powerful computing capacity of the server is utilized to perform the anti-counterfeiting identification. The control board may also transmit information such as a serial number obtained by the anti-counterfeiting identification of the filter cartridge to the server to achieve binding between the water purification apparatus and the filter cartridge 300.

In some embodiments, the control board is configured to receive a heartbeat signal transmitted by the image acquisition device 400 at a target time interval, and transmit a feedback signal corresponding to the heartbeat signal to the image acquisition device 400.

In this embodiment, a timed heartbeat communication method is used between the control board and the image acquisition device 400 to ensure that a communication link between the control board and the image acquisition device 400 is unobstructed, in such a manner that when the image acquisition device 400 acquires images, the images can be output to the control board normally.

In some embodiments, the water purification apparatus further comprises a fault information output device.

In this embodiment, the fault information output device is electrically connected to the control board and disposed at the housing 200. The fault information output device is configured to output fault information of the water purification apparatus.

When a fault occurs in the image acquisition device 400, the reset button, the control board, or other components of the water purification apparatus, the fault information output device may output corresponding fault information to remind the user of the fault of the apparatus and promptly inform after-sales service to repair the fault.

In actual implementation, the anti-counterfeiting information output device may be a device that can output information, such as a display, a speaker, etc.

In some embodiments, the fault information output device comprises at least one fault indicator light configured to light up when a fault occurs in the water purification apparatus.

In actual implementation, the fault information output device may comprise the fault indicator lights corresponding to a plurality of components of the water purification apparatus. For example, the fault information output device may comprise three fault indicator lights, where two fault indicator lights correspond to the image acquisition device 400, the reset button, and the communication module, respectively.

When the fault indicator light corresponding to the image acquisition device 400 lights up, it is indicated that the image acquisition device 400 has a fault. When the fault indicator light corresponding to the reset button lights up, it is indicated that the reset button has a fault. When the fault indicator light corresponding to the communication module lights up, it is indicated that the communication module has a fault.

The fault of the image acquisition device 400 may be divided into the fault of the image acquisition component and the fault of the light supplement component.

When the light supplement component has a fault, the image acquired by the image acquisition device 400 may be relatively dark. Whether the light supplement component has a fault can be determined based on the image acquired by the image acquisition device 400.

An embodiment is introduced below.

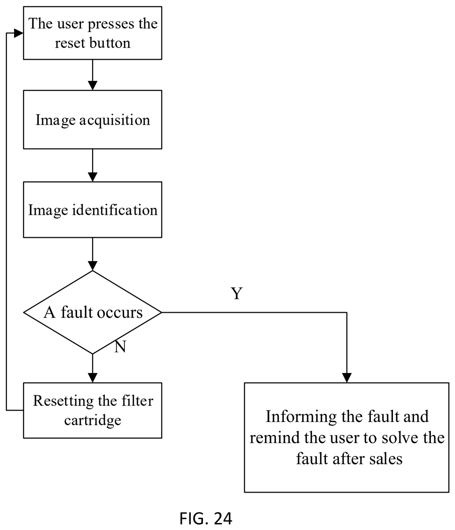

As illustrated in FIG. 24, the user presses the reset button. Subsequent to receiving reset button information, the image acquisition device 400 acquires and identifies the image.

In this embodiment, it is determined whether various components of the water purification apparatus have failed. If no fault has occurred and the filter cartridge 300 is identified as genuine, the reset operation of the filter cartridge 300 is automatically performed; when a fault occurs, the fault information output device outputs the fault information to inform and remind the user to solve the fault after sales.

In some embodiments, the reset button of the water purification apparatus is a light-sensitive button.

In this embodiment, the light-sensitive button is configured to acquire a light-sensitive signal, generate a corresponding reset button signal, and control the image acquisition device 400 to perform image acquisition. The light-sensitive button acquires light-sensitive information without direct contact. The user may also trigger the light-sensitive button even when his hands are wet or when holding objects.

It should be understood that, a space inside the housing 200 of the water purification apparatus is limited, and a conventional camera module requires a long shooting distance, which makes the conventional camera module difficult to be mounted in the housing 200. In addition, the water purification apparatus is a closed space with insufficient light, resulting in poor imaging quality of the conventional camera module.

The embodiments of the present disclosure further provide the image acquisition device 400. The image acquisition device 400 is used for the anti-counterfeiting identification of the filter cartridge 300 of the water purification apparatus. The image acquisition device 400 may be mounted inside the water purification apparatus and provide sufficient light for the anti-counterfeiting identification, which helps to reduce a dimension of the water purification apparatus and improve a space utilization rate inside the water purification apparatus.

The image acquisition device 400 provided in the embodiments of the present disclosure comprises the lens, the light supplement element, and a light guide assembly 410.

The lens is configured to acquire the image of the anti-counterfeiting mark area of the filter cartridge 300. The light supplement element is configured to supplement light for lens image acquisition.

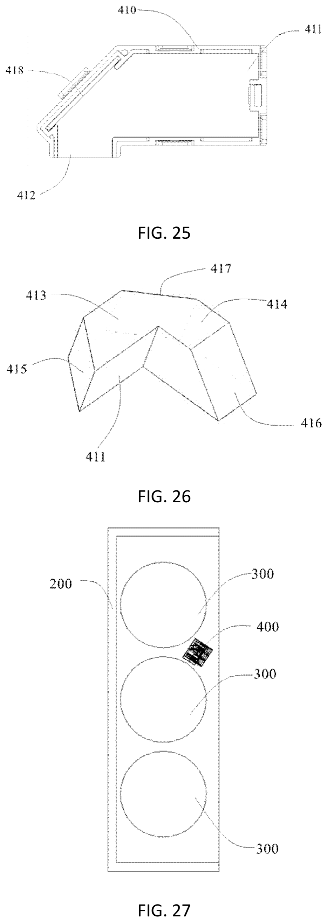

As illustrated in FIG. 25, the light guide assembly 410 comprises a first optical surface 411 and a second optical surface 412 that are arranged to not directly face each other to cause a curved optical path of the light guide assembly 410. The lens and the light supplement element face towards the first optical surface 411. The second optical surface 412 faces towards the anti-counterfeiting mark area of the filter cartridge 300.

In this embodiment, the first optical surface 411 and the second optical surface 412 are arranged to not directly face each other. The optical path of the light guide assembly 410 is curved and compact. Compared with a conventional vertical or horizontal optical path in the related art, a distance between the two optical surfaces is greatly reduced, and a dimension of the image acquisition device 400 is reduced, which facilitates mounting in a narrow space inside the housing 200.

In actual implementation, as illustrated in FIG. 27, the image acquisition device 400 with the light guide assembly 410 featuring the curved optical path can be attached to a surface of the filter cartridge and mounted in a narrow space between the filter cartridge 300 and the housing 200. In this way, the space utilization rate inside the water purification apparatus is improved, and the dimension of the water purification apparatus is facilitated to be reduced.

In this embodiment, the light guide assembly 410 is configured to guide a light ray to be transmitted between the first optical surface 411 and the second optical surface 412. The lens is configured to acquire the image of the anti-counterfeiting mark area through the light guide assembly 410.

A light ray emitted by the light supplement element enters from the first optical surface 411, is guided by the light guide assembly 410, and is emitted from the second optical surface 412, evenly illuminating the anti-counterfeiting mark area of the filter cartridge 300. The light ray of the anti-counterfeiting mark area of the filter cartridge 300 enters from the second optical surface 412, is guided by the light guide assembly 410, is emitted from the first optical surface 411, and is received by the lens. In this way, the image of the anti-counterfeiting mark area of the filter cartridge 300 is acquired.

According to the image acquisition device 400 of the present disclosure, the transmission of the light ray between the filter cartridge 300 and the lens is guided by the light guide assembly 410, and the light guide assembly 410 has the two optical surfaces that are arranged to not directly face each other. The light supplement element is disposed adjacent to the lens to provide sufficient light for the anti-counterfeiting identification. In this way, the problem of mounting the image acquisition device 400 in the narrow space inside the water purification apparatus is solved, the space utilization rate inside the water purification apparatus is improved, and the dimension of the water purification apparatus is facilitated to be reduced.

The embodiments of the present disclosure are described in detail below from two different implementation perspectives.

First, the light guide assembly 410 has a prism structure.

In this embodiment, the light guide assembly 410 has the prism structure. A traveling direction of a light ray is changed through the prism structure, and propagation, reflection, and redirection of the light ray are completed inside the prism structure, allowing a long optical path in a vertical direction or a horizontal direction in the related art to be folded.

In some embodiments, as illustrated in FIG. 26, the prism structure comprises a first prism column 413 and a second prism column 414. The first optical surface 411 is located at an end of the first prism column 413. The other end of the first prism column 413 is connected to an end of the second prism column 414. The second optical surface 412 is located at the other end of the second prism column 414.

The light ray emitted by the light supplement element enters from the end of the first prism column 413. When the propagation, the reflection, and the redirection of the light ray in the first prism column 413 and the second prism column 414 are completed, the light ray is emitted from the other end of the second prism column 414, evenly illuminating the anti-counterfeiting mark area of the filter cartridge 300.

A light ray of the anti-counterfeiting mark area of the filter cartridge 300 enters from the other end of the second prism column 414. When the propagation, the reflection, and the redirection of the light ray are completed in the second prism column 414 and the first prism column 413, the light ray is emitted from the end of the first prism column 413 and received by the lens. In this way, the image of the anti-counterfeiting mark area of the filter cartridge 300 is acquired.

In some embodiments, the first prism column 413 has a first reflection surface 415. The second prism column 414 has a second reflection surface 416. The first reflection surface 415 is configured to reflect a light ray from the first optical surface 411 to the second reflection surface 416. The second reflection surface 416 is configured to reflect a light ray from the second optical surface 412 to the first reflection surface 415.

In this embodiment, the first reflection surface 415 of the first prism column 413 and the second reflection surface 416 of the second prism column 414 provide a function of reflection and redirection for the light ray. By adjusting an angle between the first prism column 413 and the second prism column 414, an angle between the first reflection surface 415 and the first optical surface 411, and an angle between the second reflection surface 416 and the second optical surface 412, the light ray can be ensured to be transmitted between the first optical surface 411 and the second optical surface 412.

In some embodiments, a connection where the first prism column 413 and the second prism column 414 meet has a third reflection surface 417. The third reflection surface 417 is configured to reflect a light ray from the first reflection surface 415 to the second reflection surface 416.

In this embodiment, the light guide assembly 410 has three reflection surfaces, namely the first reflection surface 415, the second reflection surface 416, and the third reflection surface 417. The first reflection surface 415 cannot directly reflect a light ray to the second reflection surface 416, and the light ray is reflected by the third reflection surface 417, in such a manner that the light ray can be transmitted between the first optical surface 411 and the second optical surface 412.

It should be noted that, when the light guide assembly 410 has the prism structure, the reflection surfaces of the prism structure may be three or any other number. The number and angle of the reflection surfaces may be adjusted based on a positional relationship between the anti-counterfeiting mark area of the filter cartridge 300 and the lens, to ensure that the first optical surface 411 and the second optical surface 412 are arranged to not directly face each other, and the optical path of the light guide assembly 410 is the curved optical path.

In some embodiments, the angle between the first reflection surface 415 and the first optical surface 411 is 45°. The angle between the second reflection surface 416 and the second optical surface 412 is 45°. An angle between the third reflection surface 417 and the first reflection surface 415 and an angle between the third reflection surface 417 and the second reflection surface 416 are both 90°.

For example, ambient light reflected by the anti-counterfeiting mark area of the filter cartridge 300 is in the vertical direction and enters the prism structure from the second optical surface 412. Subsequent to undergoing total reflection at the second reflection surface 416, the ambient light is converted to be in the horizontal direction. The ambient light undergoes the total reflection once at the third reflection surface 417 and once more at the first reflection surface 415. The ambient light is emitted from the first optical surface 411 and received by the lens, in such a manner that the image of the anti-counterfeiting mark area is acquired.

In this embodiment, the light ray undergoes the total reflection and redirection for a plurality of times in the light guide assembly 410. An overall optical path of the light guide assembly 410 is relatively compact and significantly compressed in a vertical space. As a result, an overall dimension of the image acquisition device 400 is reduced, enabling the image acquisition device 400 to be easily mounted inside a water purifier.

In some embodiments, the prism structure is made of plastic or glass.

In actual implementation, the prism structure may be made of optical materials such as plastic or glass. These optical materials are polished to form reflection surfaces at different angles and positions in the prism structure.

Second, the light guide assembly 410 is provided with a mirror 418.

In some embodiments, the light guide assembly 410 defines a light guide channel. An end of the light guide channel is the first optical surface 411. The other end of the light guide channel is the second optical surface 412. The light guide channel is provided therein with at least one mirror 418.

The light guide assembly 410 defines the light guide channel and the light ray is transmitted in the light guide channel. The end of the light guide channel is the first optical surface 411. The lens and the light supplement element face towards the first optical surface 411. The other end of the light guide channel is the second optical surface 412. The anti-counterfeiting mark area of the filter cartridge 300 faces towards the second optical surface 412.

As illustrated in FIG. 25, the light guide channel is provided with one mirror 418. The ambient light reflected by the anti-counterfeiting mark area of the filter cartridge 300 is in the vertical direction and enters the light guide channel from the second optical surface 412. Subsequent to undergoing the total reflection at the mirror 418, the ambient light is converted to be in the horizontal direction, emitted from the first optical surface 411, and received by the lens, in such a manner that the image of the anti-counterfeiting mark area is acquired.

It should be noted that, the mirror 418 in the light guide channel may be one or any other number. The number and angle of the mirror 418 may be adjusted based on the positional relationship between the anti-counterfeiting mark area of the filter cartridge 300 and the lens, to ensure that the first optical surface 411 and the second optical surface 412 are arranged to not directly face each other, and the optical path of the light guide assembly 410 is the curved optical path.

In actual implementation, the mirror 418 may be made of a smooth material with a reflection layer coated on a front surface or a back surface.

In some embodiments, the light supplement element comprises one or more supplemental lights.

In this embodiment, one supplement light with sufficient power may be provided, or a plurality of supplement lights may be provided to provide sufficient lighting, to allow the lens to acquire a clear image of the anti-counterfeiting mark area.

In actual implementation, the supplement light may be a LED light

The embodiments of the present disclosure further provide a water purification apparatus. The water purification apparatus comprises the above-described image acquisition device 400.

As illustrated in FIG. 27, the water purification apparatus comprises the housing 200, at least one filter cartridge 300, and at least one image acquisition device 400.

The housing 200 defines the accommodation space. The filter cartridge 300 and the image acquisition device 400 are located in the accommodation space. The image acquisition device 400 is in one-to-one correspondence with the filter cartridge 300. The image acquisition device 400 faces towards the anti-counterfeiting mark area of the filter cartridge 300.

The light guide assembly 410 of the image acquisition device 400 comprises the first optical surface 411 and the second optical surface 412 that are arranged to not directly face each other to cause the curved optical path of the light guide assembly 410. The lens and the light supplement element face towards the first optical surface 411. The second optical surface 412 faces towards the anti-counterfeiting mark area of the filter cartridge 300.

In this embodiment, the first optical surface 411 and the second optical surface 412 are arranged to not directly face each other. The optical path of the light guide assembly 410 is curved and compact. Compared with the conventional vertical or horizontal optical path in the related art, the distance between the two optical surfaces is greatly reduced, and the dimension of the image acquisition device 400 is reduced, which facilitates mounting in the narrow space inside the housing 200.

The light ray emitted by the light supplement element enters from the first optical surface 411, is guided by the light guide assembly 410, and is emitted from the second optical surface 412, evenly illuminating the anti-counterfeiting mark area of the filter cartridge 300. The light ray of the anti-counterfeiting mark area of the filter cartridge 300 enters from the second optical surface 412, is guided by the light guide assembly 410, is emitted from the first optical surface 411, and is received by the lens. In this way, the image of the anti-counterfeiting mark area of the filter cartridge 300 is acquired.

According to the water purification apparatus provided in the embodiments of the present disclosure, the transmission of the light ray between the filter cartridge 300 and the lens is guided by the light guide assembly 410, and the light guide assembly 410 has the two optical surfaces that are arranged to not directly face each other. The light supplement element is disposed adjacent to the lens to provide sufficient light for the anti-counterfeiting identification. In this way, the problem of mounting the image acquisition device 400 in the narrow space inside the water purification apparatus is solved, the space utilization rate inside the water purification apparatus is improved, and the dimension of the water purification apparatus is facilitated to be reduced.

It should be noted that terms "comprise", "include" or any other variations thereof are meant to cover non-exclusive comprising, such that the process, method, goods or device comprising a series of elements do not only comprise those elements, but further comprise other elements that are not explicitly listed, or further comprise inherent elements of the process, method, goods or device. In a case that there are no more restrictions, an element limited with the statement "comprises a ..." does not exclude the presence of additional identical elements in the process, method, goods or device that comprises the said element. In addition, it should be noted that the scope of the methods and device in the embodiments of the present disclosure is not limited to performing functions in the order shown or discussed, and can also comprise performing functions in a substantially simultaneous manner or in the reverse order according to the functions involved. For example, the described methods can be performed in an order different from that described, and various operations can be added, omitted, or combined. In addition, features described with reference to certain examples can be combined in other examples.

In the description of the present disclosure, it should be understood that the orientation or the position indicated by terms such as "center", "longitudinal", "lateral", "length", "width", "over", "below", "left", "right", "vertical", and "horizontal", should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation to the present disclosure.

In the description of the present disclosure, the "first feature" and the "second feature" may comprise one or more of these features, and "plurality" means at least two.

Reference throughout this specification to "an embodiment", "some embodiments", "schematic embodiments", "an example", "a specific example", or "some examples" means that a particular feature, structure, material, or characteristic described in connection with the embodiment or example is comprised in at least one embodiment or example of the present disclosure. In this specification, exemplary descriptions of above terms are not necessarily referring to the same embodiment or example. Further, the particular features, structures, materials, or characteristics can be combined in any suitable manner in one or more embodiments or examples.

The embodiments of the present disclosure are described above with reference to the accompanying drawings, but the present disclosure is not limited to the above specific implementations, which are merely illustrative, rather than restrictive. Under the motivation of the present disclosure, those skilled in the art can also make many variations without departing from the principles of the present disclosure. These variations are to be encompassed by the protection scope of present disclosure.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. An image acquisition device, used for anti-counterfeiting identification of a filter cartridge of a water purification apparatus, the image acquisition device comprising:
a lens and a light supplement element; and
a light guide assembly having a first optical surface and a second optical surface that are arranged to not directly face each other to cause a curved optical path of the light guide assembly, the lens and the light supplement element facing towards the first optical surface, the second optical surface facing towards an anti-counterfeiting mark area of the filter cartridge;
wherein the light guide assembly is configured to guide a light ray to be transmitted between the first optical surface and the second optical surface, and wherein the lens is configured to acquire an image of the anti-counterfeiting mark area through the light guide assembly.

2. The image acquisition device according to claim 1, wherein the light guide assembly has a prism structure.

3. The image acquisition device according to claim 2, wherein the prism structure comprises a first prism column and a second prism column, wherein:
the first optical surface is located at an end of the first prism column;
an other end of the first prism column is connected to an end of the second prism column; and
the second optical surface is located at an other end of the second prism column.

4. The image acquisition device according to claim 3, wherein:
the first prism column has a first reflection surface;
the second prism column has a second reflection surface;
the first reflection surface is configured to reflect a light ray from the first optical surface to the second reflection surface; and
the second reflection surface is configured to reflect a light ray from the second optical surface to the first reflection surface.

5. The image acquisition device according to claim 4, wherein a connection where the first prism column and the second prism column meet has a third reflection surface, wherein the third reflection surface is configured to reflect a light ray from the first reflection surface to the second reflection surface.

6. The image acquisition device according to claim 5, wherein:
an angle between the first reflection surface and the first optical surface is 45°;
an angle between the second reflection surface and the second optical surface is 45°; and
an angle between the third reflection surface and the first reflection surface and an angle between the third reflection surface and the second reflection surface are both 90°.

7. The image acquisition device according to any one of claims 2 to 6, wherein the prism structure is made of plastic or glass.

8. The image acquisition device according to any one of claims 1 to 7, wherein the light guide assembly defines a light guide channel, wherein:
an end of the light guide channel is the first optical surface;
an other end of the light guide channel is the second optical surface; and
the light guide channel is provided therein with at least one mirror.

9. The image acquisition device according to any one of claims 1 to 8, wherein the light supplement element comprises one or more supplemental lights.

10. A water purification apparatus, comprising:
a housing defining an accommodation space;
at least one filter cartridge located in the accommodation space; and
at least one image acquisition device according to any one of claims 1 to 9, wherein:
the image acquisition device is located in the accommodation space;
the image acquisition device is in one-to-one correspondence with the filter cartridge; and
the image acquisition device faces towards an anti-counterfeiting mark area of the filter cartridge.

11. The water purification apparatus according to claim 10, further comprising:
a reset button disposed at the housing and configured to output, based on a received input, a reset button signal; and
a control board electrically connected to the reset button and the image acquisition device, wherein the control board is located in the accommodation space and configured to control, based on the reset button signal, the image acquisition device to acquire an image of the anti-counterfeiting mark area.

12. The water purification apparatus according to claim 11, further comprising an anti-counterfeiting information output device, wherein:
an anti-counterfeiting information output device is disposed at the housing and electrically connected to the control board; and
the anti-counterfeiting information output device is configured to output product authenticity information of the filter cartridge.

13. The water purification apparatus according to claim 12, wherein the anti-counterfeiting information output device comprises an anti-counterfeiting indicator light configured to light up in response to the filter cartridge being identified as counterfeit.

14. The water purification apparatus according to any one of claims 11 to 13, wherein the image acquisition device comprises an image acquisition component and a light supplement component.

15. The water purification apparatus according to any one of claims 11 to 14, further comprising a communication module electrically connected to the control board, wherein the control board is configured to communicate with a server through the communication module.

16. The water purification apparatus according to any one of claims 11 to 15, wherein the control board is configured to receive a heartbeat signal transmitted by the image acquisition device at a target time interval, and transmit a feedback signal corresponding to the heartbeat signal to the image acquisition device.

17. The water purification apparatus according to any one of claims 11 to 16, further comprising a fault information output device, wherein:
the fault information output device is electrically connected to the control board and disposed at the housing; and
the fault information output device is configured to output fault information of the water purification apparatus.

18. The water purification apparatus according to claim 17, wherein the fault information output device comprises at least one fault indicator light configured to light up in response to a fault occurring in the water purification apparatus.

19. The water purification apparatus according to any one of claims 11 to 18, wherein the image acquisition device further comprises a plurality of image acquisition units arranged in one-to-one correspondence with a plurality of filter cartridges of the water purification apparatus.

20. The water purification apparatus according to any one of claims 11 to 19, wherein the reset button is a light-sensitive button.
